(19) Europäisches Patentamt

European Patent Office

Office européen des brevets

(11) **EP 1 684 499 A2**

(12) **EUROPEAN PATENT APPLICATION**

(43) Date of publication:
**26.07.2006 Bulletin 2006/30**

(51) Int Cl.:
*H04N 1/405* (2006.01)    *B41M 1/04* (2006.01)

(21) Application number: **06006081.1**

(22) Date of filing: **19.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **21.01.2004 US 761939**

(62) Document number(s) of the earlier application(s) in accordance with Art. 76 EPC:
**05075137.9 / 1 557 279**

(71) Applicant: **Esko-Graphics A/S
2750 Ballerup (DK)**

(72) Inventor: **Dewitte, Hans
8200 Brugge (BE)**

(74) Representative: **Bird, William Edward et al
Bird Goen & Co.,
Klein Dalenstraat 42A
3020 Winksele (BE)**

Remarks:
This application was filed on 24 - 03 - 2006 as a divisional application to the application mentioned under INID code 62.

(54) **Relief plates, platemaking masters therefor, and methods for producing such platemaking masters and plates**

(57)    A relief plate, e.g., flexographic plate for printing an image, a platemaking master for producing a relief plate, and a method for producing a platemaking master. The image includes an area to be printed solid. The plate includes in the area to be printed solid a set of line pattern perforations designed to not carry ink on the plate. The line pattern perforations include at least one of the set of patterns consisting of a line screen pattern, a jagged line pattern, a wavy line pattern, a line pattern wherein the lines are not of constant thickness, a cross-hatch pattern, and a periodic pattern of circular lines. In one version, the relief plate including at least one area intended for reproducing a minimum non-zero gray-level using a first halftone pattern of dots. The platemaking master for the relief plate provides exposure in the well-regions between the halftone, such that the wells in the plate are shallower than if no exposure is provided, thereby providing for smaller halftone dots than if no exposure is provided in the well regions of said at least one area.

FIG. 3B

EP 1 684 499 A2

**Description**

BACKGROUND OF THE INVENTION

The present invention is related to printing with relief plates, and in particular to providing a flexographic printing plate that allows for small halftone dots in highlight areas and for good solid rendition.

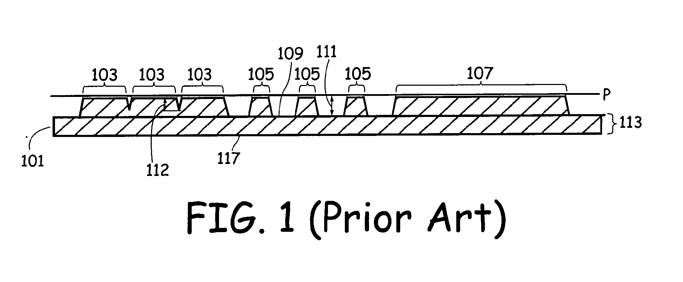

In flexographic ("flexo") printing, ink is transferred from a flexographic plate to a substrate. The printing plate is a relief plate much in the same manner as a common rubber stamp. The relief parts of the plate are those that have full thickness so that when ink is transferred onto such relief parts, that ink is transferred to the substrate. The non-relief parts are those parts that are thinned out such that there is no transfer of ink. FIG. 1 shows a flat flexographic plate in cross section. Relief parts or relief areas 103, 105 and 107 are those that are in contact with the substrate on which printing occurs, much in the same manner as a common rubber stamp. Each of these is supposed to print with the same amount of ink. Typically, flexographic plates are affixed to a cylinder for printing. An inking roller supplies the ink. The amount of ink is typically determined by an ink supply using, for example, an anilox roller, which is an engraved steel and chrome-coated ink metering roll, the engraving being of small cells that contain ink. The cell size and depth determine the amount of ink.

Gray-scale images are created using halftoning, e.g., with a screening pattern. By gray-scale is meant, for a plate printing in a particular color, the amount of the particular color being reproduced, so it is reproduced as a density or coverage percentage of ink in a reproduction. In FIG. 1, for example, the region with relief areas 103 may be a halftone dot region to print at a first density, the region with relief areas 105 may be a halftone dot region to print at a second density, while the relief region 107 may be a part for printing a solid tone. Thus, relief areas 103 may be halftone dots for printing at the first density, and relief areas 105 may be halftone dots for printing at the second higher density. By mixing gray levels of a number of printing colorants, typically cyan, magenta, yellow and black, a wide variety of colors can be rendered.

Two related properties of printing quality are the achievable color gamut and the achievable contrast. By contrast is meant the ratio between the lightest printing part— but not zero or no printing at all—and the darkest printing part. The color gamut means the range of colors that can be rendered, and is related to the contrast for any one colorant. Compared to other printing processes such as offset, letterpress or gravure, flexography has traditionally suffered from limited contrast and limited color gamut. Flexography has such limitations because the minimum printable dot is often as dark as 12%, typically because some flexo plates have difficulty keeping small dots undamaged during platemaking and during high speed printing with large runlengths. Under such conditions, very small printing dots tend to break and/or bend, producing ugly effects or no print at all. Thus, the flexo industry has traditionally avoided this problem by limiting the lighter areas, for example using digital methods such as dot gain compensation tables or compensation functions according to which the lighter areas are converted to darker areas. This clearly reduces contrast.

Traditional flexography also has difficulty, compared to other printing methods, printing solid areas without artifacts. Such artifacts are not only annoying to the eye, but also diminish the solid density achievable, and thus the achievable contrast. Specifically large solid areas typically print unevenly, in particular when printing on substrates like polyethylene. When this effect is measured using a densitometer or studied under a microscope, it appears that parts of the solid area are left uninked, leaving parts of the substrate reflecting light, thus producing the illusion of gray. This effect occurs unevenly. Thus a solid black area appears unevenly gray rather than evenly black. This effect is very dependent on the particulars of the press, the plate and the inking conditions. Typically, the lower the quality of the equipment and consumables, e.g., the lower the cost, the more pronounced the effect.

The color gamut is related to the contrast. Loss of contrast also leads to a smaller color gamut because colors that would need a low percentage of ink, e.g., requiring a half tone dot smaller than the minimum realizably printing dot can no longer be reproduced. Also colors that need a higher density of an ink than the highest solid ink density that can reliably be reproduced cannot be reproduced. Thus "vivid" colors that have high saturation are hard to print well. A flexo color print typically appears less vivid, more dull than a similar print in gravure or offset.

Furthermore, flexography traditionally needs screens with lower screen ruling than other printing processes. It can be shown that lower screen rulings will make the inks less selective in their absorption spectrum than higher screen rulings or stochastic screening. This lack of selectivity will also lead to a "graying" effect where a screened color seems to loose its saturation due to the screening. Cyan will look more red, magenta will look more green and yellow will look more blue in low rulings than the same dot percentage in high rulings or in stochastic screening.

Thus there has long been a need to improve the contrast capabilities of flexo printing.

A first known method of improving contrast is to use lower screen rulings. Since lower screen rulings use larger halftone dots, a given minimum dot size will represent a lower dot percentage and so the contrast will improve. Lower screen rulings however diminish sharpness of the image and they also badly influence the color gamut in the midtone regions, e.g., because of the selectivity effect described above.

More recently, digital plate technology and thin plate technology have lowered the size of the minimum printable dot. While the industry has welcomed such thin plates, the industry has also come to expect higher screen ruling. The most common screen ruling for offset printing, for example, recently shifted from 150 lpi to 175 lpi. This request for higher and higher screen ruling continues with very high screen rulings like 250 lpi and stochastic screening becoming more common.

Technologies have recently been introduced that extend the color gamut, e.g., using 6-color, e.g., Hexachrome, or 7-color separations. These technologies however make printing considerably more expensive. The plate cost typically increases linearly with the number of plates. The cost of producing separation typically increases even faster since separation technology for 6- or 7-color printing is by no means as faithful and as well worked out as is the case for standard 4-color separation.

Technologies such as softer plates, higher pigmented inks or capped plates have also been introduced and enable printing darker shadows. Many of these methods significantly increase solid density, often at the cost of the quality of the lighter tones. Contrast is therefore not always better.

Many screening methods have been developed to overcome the contrast and color gamut capabilities.

One common screening method to deal with the inability to print very small halftone dots is to combine "frequency modulated" screening in the highlight areas such that the number of dots varies with the density, with traditional amplitude modulated screening in the darker areas such that the area of the halftone dots varies with the density.

U.S. Patent 5,766,807 to Delabastita, et al., incorporated herein by reference, describes one such hybrid method. U.S. patent 6,445,465 to Samworth, also incorporated herein by reference, describes another such method. In each of these methods, highlight patterns are produced with fewer dots than in the other parts of the density scale.

It has been found that the effect of removing dots from a uniform screen pattern is not pleasing to the eye. Therefore, having dots that are too large is best avoided even with a method that uses a form of FM (frequency modulated screening) in the highlight area. Frequency modulated screening is a type of screening that employs irregular clusters of equally sized pixels (about 20 microns for commercial print applications) to represent continuous-tone images. The placement of these pixels, although seemingly random, is precisely calculated to produce the desired hue and intensity. The dots are either clustered together to form darker tonal values or more widely distributed for lighter values. This process differs from traditional halftoning in which the distance between dots remains constant while dot size varies to create the desired hue and intensity.

A method called "partial-off-grid screening" herein, commercially known as SambaFlex™, and marketed by Esko-Graphics NV of Gent Belgium, the applicant of the present invention, partially solves the non-pleasing effect of removing dots from a screen pattern by moving those dots that remain off the mathematical screening grid that is used in the higher density areas, i.e., in the areas that use a form of AM (amplitude modulation).

Nevertheless, print buyers still prefer normal conventional screen patterns, so that there is a need for a method that provides for reliably using small halftone dots in flexography, and for a flexographic plate that uses such smaller dots in the highlight areas.

Regarding improving solid rendition, U.S. Patent 6,213,018 to inventor Samworth and incorporated herein by reference, discloses a flexographic printing plate having solid image areas which are covered by a plurality of small shallow cells similar to the ink carrying cells used in anilox ink metering rolls. The size and positions indeed are preferably matched to the ink metering roll. These cells fill with ink during the plate inking step and reproduce solid image areas with more uniform printing, while at the same time reducing the halo typical of flexographic printing of solids. Also described in U.S. Patent 6,213,018 is a method for producing the cells, including adding a screen pattern to the printing plate in the solid areas. The screen pattern is a regular pattern of cells, closely resembling circles at a reasonably high screen ruling. The volume of the cells should be close to the volume of the anilox cells for best ink acceptation.

There still, however, is a need in the art for a screen, a screening method using the screen, and a method of producing the screen that may improve the contrast and color gamut achievable by a particular flexographic printing process. By a particular "flexographic printing process" is meant the particular combination of a particular printing press, particular inks, particular plates, a particular mounting tape, a particular anilox roller and a particular substrate.

A desirable property of such a screening method is the ability to be implemented in a raster image processor (RIP). A RIP is a relatively productive technology for generating the platemaking masters for making flexographic plates.

Color management is known and common. For example, it is known how to generate a color device profile for many output devices, such as printing processes, and a proofing device for a printing process. Such a color device profile defines how to convert from a device independent color to the amount of colorant, e.g., ink, to use on the output device. For example, for a particular process that uses screening, the device profile provides a mechanism to convert any color to percentage ink coverage percentages for plates for the inks.

A typical method for generating a device color profile for an output device includes printing a set of patches for a set of coverage percentages of the colorants, then measuring the actual color of the printed patches, e.g., using a photospectrometer, or other device that provides the actual colors, e.g., in some device independent color space. A reverse mapping is then produced from colors in the device independent color space to the required coverage percentages for reproducing the color.

There recently has been demand for using color management systems, and thus for generating device profiles for flexographic printing processes. The color charts printed using flexographic processes have caused problems to traditional color management systems because 100% coverage percentages have generated inconsistent low-quality prints that often are lower in density than the highest screen value in the chart. Such traditional management systems do not typically support devices such as flexographic with which higher screen percentages may deliver lower rather than higher saturation and/or density than a slightly lower value.

Thus there is a need for a method of generating a color profile for a printing process that uses a relief plate, such as flexography.

SUMMARY OF THE INVENTION

Described herein are a relief plate, e.g., flexographic plate for printing an image, a platemaking master for producing a relief plate, and a method for producing a platemaking master. One aspect is when the image includes an area to be printed solid. The plate includes in the area to be printed solid a set of line pattern perforations designed to not carry ink on the plate. In different embodiments, the line pattern perforations include at least one of the set of patterns consisting of a line screen pattern, a jagged line pattern, a wavy line pattern, a line pattern wherein the lines are not of constant thickness, a cross-hatch pattern, and a periodic pattern of circular lines.

One aspect is when the relief plate includes at least one area intended for reproducing a minimum non-zero gray-level using a first halftone pattern of dots. The platemaking master for the relief plate provides exposure in the well-regions between the halftone, such that the wells in the plate are shallower than if no exposure is provided, thereby providing for smaller halftone dots than if no exposure is provided in the well regions of said at least one area.

In an aspect, the present invention provides a relief plate for printing an image, said image including an area to be printed solid, the plate including in the area to be printed solid a set of line pattern perforations designed to not carry ink on the plate. The plate may be a flexographic plate.

The line pattern perforations may include at least one of the set of patterns consisting of a line screen pattern, a jagged line pattern, a wavy line pattern, a line pattern wherein the lines are not of constant thickness, a cross-hatch pattern, and a periodic pattern of circular lines. The line pattern perforations may form a stochastic pattern, e.g. a stochastic dot pattern. Alternatively, the line pattern perforations may form a periodic pattern at a frequency in at east one direction of at least 200 per inch.

The plate may include at least one non-solid rendition area screened with a halftone screen at a halftone screen angle, wherein the line pattern perforations are substantially in a pattern direction, and wherein the pattern direction is between 20 and 70 degrees to the printing direction, preferably approximately 45 degrees to the printing direction.

In a relief plate according to the present invention, the line pattern perforations comprise lines having a thickness. The thickness of lines in the line pattern perforations may be selected such when the plate is inked and a reproduction is made, the lines in the reproduction almost fully but not necessarily completely fill in.

The plate may include at least one non-solid rendition area screened with a halftone screen having a screen frequency, and wherein the line pattern perforations form a periodic pattern at a frequency an integer multiple of the screen frequency.

The plate may include a least one non-solid rendition area screened with a halftone screen having a screen pattern that has a supercell structure defined by a first set of supercell parameters, and wherein the line pattern perforations form a periodic pattern according to a second set of supercell parameters that have a rational relationship to the first set of supercell parameters, the rational relationship defined by two integer values parameters.

The plate may include at least one non-solid rendition area screened with a halftone screen, including at least one area for reproduction at a corresponding gray-level above a threshold gray-level, and wherein the perforations are included in at least some of the non-solid areas for reproduction at corresponding gray-levels above said threshold gray-level. In this case, the relief plate may include perforations in non-solid rendition areas such that the nature of the perforations is related to the local gray-level to provide a smooth transition from the threshold gray-level using the main screen with no perforations to the areas for solid rendition including the perforations.

In another aspect, the present invention provides a plate for relief printing of an image by transfer of ink to relief regions on the plate using an inking system, the plate including:

at least one area to be reproduced as a solid region in a reproduction

wherein the area of the plate for solid region reproduction includes a set of relatively thin grooves intended to not receive ink by the inking system.

The grooves may have a thickness of between 5 and 60 micrometer, preferably a thickness of between 10 and 50 micrometer.

The plate may be a flexographic plate.

The set of grooves may form at least one of the set of patterns consisting of a line screen pattern, a jagged line pattern, a wavy line pattern, a line pattern wherein the lines are not of constant thickness, a cross-hatch pattern, and a periodic pattern of circular lines. The set of grooves may form a stochastic dot pattern or a periodic pattern at a frequency in at east one direction of at least 200 per inch.

According to an embodiment of this aspect of the present invention, the plate includes a least one non-solid rendition area screened with a halftone screen at a halftone screen angle, wherein the set of grooves may form a pattern substantially in a pattern direction, and wherein the pattern direction is between 20 and 70 degrees, preferably approximately 45 degrees, to the printing direction.

The thickness of the grooves may be selected such that when a reproduction is made, the lines in the reproduction corresponding to the grooves almost fully but not necessarily completely fill in.

According to an embodiment, the plate includes at least one non-solid rendition area screened with a halftone screen having a screen frequency. The set of grooves may form a periodic pattern at a frequency an integer multiple of the screen frequency.

In yet another aspect, platemaking master for producing a relief plate is provided, said relief plate including at least one area intended for reproducing a minimum non-zero gray-level using a first halftone pattern of dots. Said platemaking master provides exposure in the well-regions between the halftone dots of said area in an area corresponding to said plate area, such that the wells in the plate are shallower than if no exposure is provided, thereby providing for smaller halftone dots than if no exposure is provided in the well regions of said at least one area. The relief plate may be a flexographic plate. The platemaking master may be a film or carbon layer for making the plate. The platemaking master may be a digital master.

The exposure may be provided by one or more transparent dots in the well regions designed to be non-printing. The dots in the well regions may form a stochastic pattern.

Each well may include a protective region around any printable halftone where no exposure is provided.

The platemaking master may comprise:

printable halftone dots in said corresponding area to produce said halftone pattern of dots; and
small dots in the well regions between printable halftone dots of said corresponding area, said small dots being to provide the exposure in the well regions,
the size or sizes of the small dots selected to ensure that the small dots do not print in said area of the plate.

The small dots may be significantly smaller than the printable halftone dots.

The plate may include one or more other areas, each of a gray-level that is higher than the minimum gray-level reproduced by said area, wherein such other areas of gray-levels higher than the minimum non-zero gray-level are produced using a halftone screen, and wherein said halftone pattern of dots forms a halftone screen with same frequency and angle as the screen used for higher gray-levels.

The small dots may form a stochastic pattern.

The plate includes a first set of one or more areas each for reproducing a gray-level that is higher than the minimum gray-level and less than a threshold gray-level, wherein the plate further includes a second set of one or more areas each for reproducing a gray-level that is higher than the threshold gray-level, wherein for reproducing a gray-level between the minimum gray-level and the threshold gray-level, the number of printable dots per unit area varies according to the gray-level, and wherein for reproducing a gray-level higher than the threshold gray-level, the size of the printable dots varies according to the gray-level. In an area for reproducing a gray-level between the minimum gray-level and the threshold gray-level, the printable dots do not necessarily need to be in the same location as corresponding printable dots in an area for reproducing a gray-level higher than the threshold gray-level.

In an embodiment of a platemaking master according to the present aspect, said plate including an area to be printed solid, the master may comprise in the master's corresponding area to be printed solid a set of line patterns, such that the plate includes in the area to be printed solid a set of line pattern perforations designed to not carry ink. Thickness of lines in the line pattern perforations may be selected such when the plate is inked and a reproduction is made, the lines in the reproduction almost fully but not necessarily completely fill in.

In yet another aspect, the present invention provides a platemaking master intended for producing a flexographic plate, said master comprising:

dots arranged along a screening pattern,
said dots including a first set of dots that are printable and a second set of dots that are non-printable, the second set being empty in areas for reproducing gray-levels above a threshold gray-level.

For gray-levels below said threshold, the number of dots per unit area in the first set may increase with gray-level such that the number of non printable dots per unit area in the second set decreases.

For gray-levels above said threshold, the size of the printable dots may increase with gray-level.

The dots may form a stochastic pattern.

In yet another aspect, the present invention provides a flexographic plate having a shallow depth of wells between halftone dots in highlight areas, said shallow well depths caused by providing exposure in the well regions of the highlights by using a platemaking master to create said plate, said platemaking master providing exposure in the well regions in the highlight regions.

The platemaking master may include transmittive patterns in the well regions of the highlight areas to provide the exposure to the well regions. Said transmittive patterns may be in the form of holes in the well regions of the highlight areas, said holes selected to be non-printing dots in the plate. The holes may form a stochastic pattern in the well regions of the highlight areas.

Each well may include a protective region around any printable holes where no exposure is provided.

In yet another aspect, the present invention provides a screening method creating a combination screen pattern on a relief plate or platemaking master for a relief plate, such that highlight areas have additional dots in the well regions designed to be non-printing on the plate.

The number of additional dots may decrease with increasing gray-level in the highlight region.

Halftone dots in shadow areas may include line pattern perforations and areas for solid rendition may include line pattern perforations.

In yet another aspect, the present invention provides a screening method creating a combination screen pattern on a relief plate or platemaking master for a relief plate, such that halftone dots in shadow areas include line pattern perforations and further such that areas for solid rendition include line pattern perforations.

The number of perforations may decrease with decreasing gray-level in the shadow regions.

The thickness of the perforations may decrease with decreasing gray-level in the shadow regions.

Highlight areas may have additional dots in the well regions designed to be non-printing on the plate.

In yet another aspect, the present invention provides a threshold array for screening, the threshold array, when thresholded against a low gray-level, produces a stochastic screen with dots not all equal in size, including small dots, and produces when thresholded against a medium gray-level a conventional screen according to a frequency, angle and dot shape definition, said small dots providing for creating shallower wells in a relief plate between halftone dots than if said small dots are not included.

In yet another aspect, the present invention provides a threshold array for screening, the threshold array such that, when thresholded against maximum gray scale produces a pattern of perforations.

In yet another aspect, the present invention provides a method of making a platemaking master for making a relief plate that includes perforations, the method including:

(a) providing an original threshold array for screening an image to be printed;

(b) selecting the nature, number and position of perforations to be included in a relief plate;

(c) generating a modified threshold array by setting each matrix element in the original threshold array that corresponds to a perforation to a predetermined value that ensures that the element is prevented from being set OFF when used for halftoning, regardless of the density value of the image to be printed; and

(d) using the modified threshold array in place of the original threshold array to produce a platemaking master for a relief plate for printing the image,

the modified threshold array being such that when thresholded against the maximum gray-level produces a pattern of perforations in the platemaking master.

In yet another aspect, the present invention provides a screening method using a set of bitmaps, one bitmap per gray-level, the screening method determining a halftone screen for a part of an image according to the bitmap corresponding to the gray-level of the part, such that the bitmap for a first gray-level includes dots of a first kind that are ON in a first position where the bitmap of a second gray-level higher than the first gray-level has no dots ON of the first kind, said dots of a first kind intended to be not printable and intended for providing additional exposure in the well regions between printable halftone dots in the bitmap of the first gray-level.

In yet another aspect, the present invention provides a method of printing a reproduction of an image comprising:

(a) determining a non-100 % density that prints darker than full solid, said non-100% density produced by a pattern that includes performations;

(b) mapping the highest gray-value in the image to the determined non-100 % density;

(c) mapping gray values in the image less than the highest gray-value to densities lower than the determined non-100 % density; and

(d) creating a relief plate from the densities to which the image was mapped, the relief plate usable for making the reproduction of the image,

such that the in areas for 100% density, the relief plate includes grooves.

In yet another aspect, the present invention provides a platemaking master for making a flexographic plate, the master providing exposure in the well regions between printable half-tone dots of highlight areas such that the wells are shallower than if no exposure is provided for the well regions, thereby providing for smaller halftone dots than if no exposure is provided in the well regions of highlight areas.

Providing the exposure in the well regions between half-tone dots of highlight areas may be in a manner that includes avoiding exposure in a guard interval around each printable halftone dot.

For areas that are to be reproduced for a shade of gray below a first pre-determined threshold, modulating the tone levels may include varying the number of printing dots per unit area. For areas that are to be reproduced for shades of gray significantly higher than the threshold, the master may include a main screen having a plurality of halftone dots centered on an array that provides a desired screen frequency at a desired screen angle. The threshold below which modulating the tone levels includes varying the number of printing dots per unit area may be the shade of gray of the main screen with halftone dots of a first selected size, and the screen may be generated by a method that includes providing exposure in the well regions between half-tone dots in the areas that are to be reproduced for shades of gray below the first pre-determined threshold such that the wells are shallower than if no exposure is provided for such well regions. The printable halftone dots in areas that are to be reproduced for shades of gray below a first pre-determined threshold may be positioned so that at least some of the dots are not centered on points of the array of the main screen.

In yet another aspect, the present invention provides a method of producing a platemaking master for making a relief plate, the method comprising:

generating a first bitmap of a source image using a first screening method using a first screen pattern;
generating a second bitmap of the source image; and
combining the first bitmap with the second bitmap,

wherein the second bitmap includes one of the set of two patterns consisting of:

an additional exposure pattern to provide additional exposure for the well regions of the first screen pattern in the highlight areas of the source image, and
a perforations pattern to provide perforations in the shadow areas or solid areas of the source image.

In the case the second bitmap includes the additional exposure pattern, the additional exposure pattern may be a screening designed not to create moiré with the first screen pattern. In the case the second bitmap includes the additional exposure pattern, the additional exposure pattern may be a stochastic pattern.

In the case the second bitmap includes the additional exposure pattern, the combining may include ensuring that no pixels are switched ON in the combined bitmap within a first neighborhood of any pixel that is ON in the first bitmap.

The method may be implemented on a processing system.

A method according to this aspect of the present invention may further comprise generating a third bitmap including the pattern not included in the second bitmap,
wherein the combining further includes combining the third bitmap to provide a bitmap of the combination of the first, second and third bitmaps.

In yet another aspect, the present invention provides a screening method for producing a platemaking master, the master for producing a relief plate, said method including:

using a first halftone pattern of dots for reproducing a minimum non-zero gray-level; and
providing exposure in the well-regions between the halftone dots in any area in the platemaking master for reproducing said minimum gray-level,
such that the wells in the resulting plate made using the platemaking master are shallower in the corresponding area of said minimum gray-level than if no exposure is provided,
the screening method thereby providing for smaller halftone dots than if no exposure is provided in the well regions of any minimum gray-level area.

The plate may be a flexographic plate. The platemaking master may be a film or carbon layer for making the plate. The platemaking master may be a digital master.

The exposure may be provided by one or more transparent dots in the well regions designed to be non-printing. The dots in the well regions may form a stochastic pattern.

Each well may include a protective region around any printable halftone where no exposure is provided.

Said platemaking master may comprise:

printable halftone dots in said corresponding area to produce said halftone pattern of dots; and

small dots in the well regions between printable halftone dots of said corresponding area, said small dots being to provide the exposure in the well regions,

the size or sizes of the small dots selected to ensure that the small dots do not print in said area of the plate.

The small dots may be significantly smaller than the printable halftone dots. The small dots may form a stochastic pattern.

A screening method according to this aspect may further include a set of line pattern perforations for reproducing a solid area, such that the plate includes in the area to be printed solid a set of line pattern perforations designed to not carry ink. The thickness of lines in the line pattern perforations may be selected such that when the plate is inked and a reproduction is made, the lines in the reproduction almost fully but not necessarily completely fill in.

In yet another aspect, the present invention provides a method of generating a device color profile for a relief printing process, the method comprising:

printing a set of patches using said printing process using a plurality of inks printed at different gray-levels, the printing using a relief plate for each ink made from a corresponding platemaking master, each master for each ink including:

for any patch for reproducing a minimum non-zero gray-level of the ink, a halftone pattern of dots; and

for any patch for reproducing a maximum-level of the ink, a set of line pattern perforations, such that the plate includes in the area to be printed solid with the color, a set of line pattern perforations designed to not carry ink;

measuring the color of each patch; and

generating a color device profile for the printing process for use in a color management system,

such that the color profile is usable for generating color separations for the printing process or for a color proofing process for the printing process.

Each master for each ink may provide exposure in the well-regions between the halftone dots in any area in the platemaking master for reproducing said minimum gray-level, such that the wells in the resulting plate made using the platemaking master are shallower in the corresponding area of said minimum gray-level than if no exposure is provided.

The printing process may be a flexographic process.

In yet another aspect, the present invention provides a method of generating a device color profile for a relief printing process, the method comprising:

printing a set of patches using said printing process using a plurality of inks printed at different gray-levels, the printing using a relief plate for each ink made from a corresponding platemaking master, each master for each ink including:

for any patch for reproducing a maximum-level of the ink, a screened pattern; measuring the color of each patch; and

generating a color device profile for the printing process for use in a color management system,

such that the color profile is usable for generating color separations for the printing process or for a color proofing process for the printing process.

Each master for each ink may further include, for any patch for reproducing a minimum non-zero gray-level of the ink, a halftone pattern of dots, and each master for each ink may provide exposure in the well-regions between the halftone dots in any area in the platemaking master for reproducing said minimum gray-level, such that the wells in the resulting plate made using the platemaking master are shallower in the corresponding area of said minimum gray-level than if no exposure is provided.

The screened pattern used for the maximum-level of the ink may be the screening percentage that produces the highest density print.

The screened pattern used for the maximum-level of the ink may be a screen of at least 90% coverage. Alternatively, the screened pattern used for the maximum-level of the ink may have a coverage percentage higher than for all gray-levels of the ink less than the maximum.

The printing process may be a flexographic printing process.

Other aspects, features, and versions shall be clear from the description herein, and the claims.

BRIEF DESCRIPTION OF THE DRAWINGS

FIG. 1 shows a relief plate such as a prior art flexographic plate in an exaggerated manner for purposes of explaining terms.

FIGS. 2A-2D show four flexographic plate cross-sections of plates with screens of four different dot sizes and/or different dot screen frequencies.

FIG. 3A illustrates an attempt to make a flexographic plate with small halftone dots at a relatively low screen frequency.

FIGS. 3B-3D describe different embodiments of an aspect of the present invention that provides for exposure in the well regions between halftone dots in highlight areas by providing non-printable exposure dots in the well regions such that the wells are shallower than if no such exposure is provided.

FIG. 4 shows an alternate embodiment of providing a protective zone around printable halftone dots according to an aspect of the present invention, and shows a negative of a platemaking master, wherein areas that are to be exposed are shown in black.

FIGS. 5A and 5B show two alternate embodiments of platemaking masters that provide additional exposure in the well regions, with a protective zone around each printable small halftone dot.

FIG. 6 shows the negative of the platemaking master shown in FIG. 3D but with four different printable halftone dot sizes, according to an aspect of the present invention.

FIGS. 7A to 7E respectively illustrate five platemaking masters that include frequency modulation for gray levels lower than the first gray-level threshold using a selected minimum size halftone dots size, according to an embodiment of the invention.

FIGS. 8A and 8B show the negative of platemaking masters using the method of U.S. Patent 6,445,465 modified to include replacing printable dots with small non-printable dots rather than removing printable dots, such that smaller printable dots may be used, according to an aspect of the present invention.

FIG. 9A is the halftone pattern that would be produced by the platemaking master of FIG. 7C, according to an aspect of the present invention.

FIG. 9B shows as arrows the desired direction of shifts of the printable dots in order to more uniformly distribute the dots to provide a more pleasing pattern, according to an aspect of the present invention.

FIG. 9C shows the printable dots moved according to the method. A displacement factor is defined that describes the average distance a dot is displaced, according to an aspect of the present invention.

FIG. 9D shows the negative of a platemaking master corresponding to the plate of FIG. 9C and including non-printable dots in the well regions between printable halftone dots, according to an aspect of the invention.

FIG. 10A shows in a simplified form a relief area with ink uniformly and thinly distributed on the relief area to produce a uniform solid rendition. FIG. 10B shows in an exaggerated manner what often happens in practice with many difficult substrates and inks: the ink does not cover all of the substrate, and droplets are formed on the relief area.

FIG. 11A shows an area of a platemaking master for rendering solid, and FIG. 11B shows the corresponding part of a reproduction using a plate made with the platemaking master, according to an aspect of the present invention.

FIGS. 12A, 12B and 12C show three different platemaking maskers for solid rendition, with corresponding reproductions. The three figures include line screen perforations of three different thicknesses, according to an aspect of the invention.

FIGS. 13A-13F respectively show six alternate line patterns for perforations that can be included in areas of solid rendition according to an aspect of the invention.

FIG. 14 shows a platemaking master for producing a plate segment that would reproduce a smoothly varying region from a dense midtone to solid (100%) coverage, according to an aspect of the present invention.

FIG. 15 shows a simplified block diagram of a processing system that includes code segments that instruct the processor to implement an embodiment of the present invention.

FIGS. 16A and 16B each shows a supercell for halftone screens. FIG. 16A is a special case of the four parameter supercell structure of FIG. 16B.

FIG. 17A shows the movement of the center of a halftone dot such that the center remains within the parameter of a printable halftone dot according to an aspect of the invention that includes displacing dot centers to appear more uniformly distributed according to an aspect of the invention. FIG. 17B shows a similar set of displacements, but with the final position outside the perimeter of the printable dot.

FIG. 18 shows a second supercell structure having a rational relationship with a first supercell structure according to an aspect of the present invention.

FIGs. 19A and 19B show the results of improved embodiments for an image gray level less than solid.

Other aspects will be clear from the description herein and the claims.

DESCRIPTION OF ILLUSTRATIVE EMBODIMENTS

One aspect of the present invention provides for using smaller dots in the highlight areas by providing shallower wells between halftone dots in a relief plate such as a flexographic plate. Another aspect of the present invention improves the ability of a relief plate such as a flexographic plate to render solid areas, and improves reproduction in the shadow areas by introducing perforations into the shadow and solid areas.

*Terminology*

FIG. 1 shows a relief plate such as a prior art flexographic plate in an exaggerated manner. The plate 101 is shown flattened out rather than on a cylinder, and in cross section. While those in the art will understand that more than one material may be used to produce the plate, the plate cross-section in FIG. 1 is shown as if made of the same material. Regions 103, regions 105, and region 107 are the areas meant for printing, and are called *relief areas.* Regions 103, for example, may be large halftone dots, while regions 105 may be medium size halftone dots. Region 107 represents an area of solid rendition, i.e., one where printing is to be at 100%.
The parts of the plate between the printing relief areas 103, 105, 107 are areas that are etched away and are called *wells* herein. These have a depth from the top printing surface to the *bottom* of the well, called the *floor* herein. The depth is called the *relief depth* and the *well depth* herein. This relief depth decreases as the percent dot coverage, i.e., the optical density of the image area to be printed, increases in any halftone area of the plate. However, this relief depth is sufficient to confine ink to the dot surface. Between the relief areas 103, for example, there is a small relief depth 112. For printing periodically spaced halftone dots, as the dots become smaller, a *maximum relief depth* 111 is reached. The bottom of the wells of a prior art plate with small periodically spaced halftone dots is called the *absolute floor* of the plate and is shown as floor 109 in FIG. 1.
Halftone relief is controlled by a number of factors, including the process, e.g., the etching process, used to remove the material from the between the dots.
Flexographic plates are typically made by photopolymerization of a photopolymer material. A plate is treated in such a way that regions exposed to radiation are polymerized, and the non-polymerized regions can be removed chemically, or by some other method. With such a photopolymer flexographic printing plate, the maximum relief depth 111 is controlled by a back exposure of the plate, which hardens the photopolymer to a given depth 113 and establishes the absolute floor 109 and thus a maximum relief depth 111.
The local distance between the back of the plate 117 and the local floor 109 (well bottom) is called the *foot* 113 of the plate.
The pattern to be printed, e.g., the halftone pattern, is produced using *a platemaking master,* which may be an actual physical platemaking master such as a sheet of exposed and developed photographic film through which radiation is passed in order to expose the plate, or a carbon layer on a digital plate for the same purpose, or a digital master which is a collection of digital information, that might be a bitmap pattern or some other digital description that can be used to directly expose a plate.

In the case of using a film platemaking master, for a halftone area, the film master typically has the negative of the pattern of the dots that are to be reproduced using the final plate. Thus, a darkened area in the film master represents the wells, while the light areas, e.g., transparent (high transmittance) areas in the case of a film master, representing the halftone dots. A film master is placed on a plate and light is shone through the platemaking master to expose the plate to photo-polymerize the material underneath. Exposure of the plate thus hardens the plate in the areas where there are dots. After processing, the unexposed areas are washed off or otherwise removed leaving the relief dots behind.

Plates may come with a thin carbon film thereon that may be removed by direct laser exposure. The resulting carbon forms a platemaking master similar to a film master.

In the case of direct exposure, any part where there is to be a dot for printing also is exposed. Thus, the digital light pattern used for exposure is also the negative of the pattern that is to be reproduced using the final plate.

Therefore, for the purposes of this invention, by a platemaking master is meant either a physical platemaking master such as a film or carbon layer on a plate, or the digital platemaking master for directly exposing a plate or a layer on a plate, or for exposing a film that can be used to make a plate. For example, the digital master may be embodied by the collection of digital signals that expose a film or directly expose a plate. As another example, the platemaking master may be embodied by some carrier medium of computer readable information to form the digital signals that expose a film or directly expose a plate.

It is to be noted that in the future, ablation by a form of energy may also be used to directly "etch" a relief plate. In such a case the digital platemaking master is the positive rather than the negative of the image to be reproduced using the final plate. The present invention is also applicable to such platemaking, and whether the platemaking master is a positive or negative will be clear from the context.

*A screening method providing for smaller dots*

One aspect of the invention is a plate that can use smaller halftone dots than prior art plates. Another aspect is a platemaking master for producing such a plate, and yet another aspect is a method of producing a platemaking master. The resulting plate that can have smaller halftone dots using an aspect of the invention decreases the average well depth between small halftone dots.

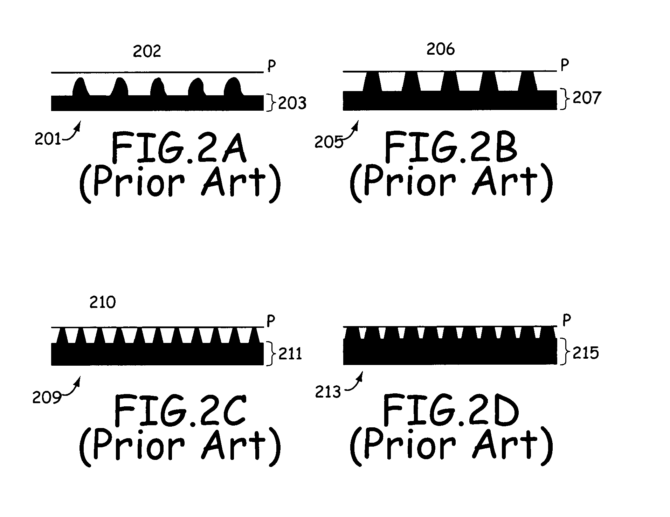

Research has been conducted and analyzed on the relationship between the screen frequency, the screen dot size and the relief pattern in a screened area of the screen. FIGS. 2A-2D show four flexographic plate cross-sections of plates with screens of four different dot sizes and/or different dot screen frequencies. These drawings are not to scale, and shown in an exaggerated manner for the purpose of illustration.

Consider FIG. 2A of a plate cross-section 201 of a plate with a screening pattern that has 85 lines per inch (lpi) with 30-micrometer dots 202. Such dots 202 are typically not printable at such a screen frequency, and indeed, FIG. 2A shows that the dots 202 do not even touch the printing surface marked P. FIG. 2B, however, shows the plate cross-section 205 with a screening pattern that includes larger - e.g. 40 micrometer - dots 206 at 86 lpi. These larger dots 206 reach the printing surface P. This happens both because the dots 206 are larger and because the well depth between the dots 206 is less than in the case of the plate of FIG. 2A. The screening pattern of FIG. 2B would therefore print well, while the screening pattern of FIG. 2A doesn't print at all, or prints ugly depending on the pressure applied during printing.

FIG. 2C shows a plate cross-section 209 with a 170 lpi screen of 30 micrometer dots 210. The dots 210 in this case reach the printing surface P, so the printing would be correct, unlike the case of FIG. 2A. When the plate is made using photopolymerization, the foot thickness 211 is more than the foot thickness 203 in the case of the 85-lpi screen of FIG. 2A. For a given dot size, because there are four times as many dots per unit area in the 170 lpi screen than in the 85 lpi screen, the amount of light energy reaching the well region is four times as much as than for a 85 lpi plate. Thus, the depth of the photopolymerization is greater, leading to less material etched away after exposure. This creates shallower wells, i.e., thicker feet.

FIG. 2D shows a cross-section 213 of a 170-lpi screen with 40-micrometer dots. The foot thickness 215 is larger than the foot thickness 207 of the 85 lpi screen of Fig. 2B. The printing would in this case also be correct.

FIGS. 2A and 2C suggest that increasing the screen ruling provides for using smaller printable halftone dots. Unfortunately, increasing the screen ruling frequency also increases the number of printing printable halftone dots. For example, doubling the screen ruling quadruples the number of halftone dots in a given area. This has the effect of reducing the contrast. Suppose, for example, that the 40-micrometer dots at 85 lpi of FIG. 2B represent a 1.5 % screen, and suppose that because of dot gain, this produces a reproduction at 4.5% density. Using such large dots therefore provides a minimum density of 4.5%. Now suppose that smaller halftone dots are used, and suppose this is achieved by doubling the screen frequency. The 30-micrometer screens at 170 lpi would now represent a 3% screen, and this would grow to about 9% in a reproduction due to the dot gain. Thus, at the higher screen ruling, a higher minimum non-zero density is achievable, so that the contrast is lower than with the larger dots.

An aspect of the invention provides for printing smaller halftone dots without increasing the printing screen frequency. For example, referring to the above example, if 30μm halftone dots with a 170 lpi screen are possible, an aspect of the invention provides for printing 30μm halftone dots with a 85 lpi screen. This is carried out by providing more exposure to the well region between dots without providing more printing dots, so as to make the wells shallower, or equivalently make the foot thicker for a given amount of back exposure.

Thus, one aspect of the invention is providing exposure in the well-regions between halftone dots of highlight areas such that the wells are shallower than if no exposure is provided in the well regions, thereby providing for smaller halftone dots than if no exposure is provided in the well regions of highlight areas.

In one embodiment, the providing exposure in the well regions between halftone dots of highlight areas is by exposing halftone dots of a small size smaller than a selected minimum printable size, the small size selected to ensure that dots of the small size do not print.

FIG.3A shows an attempt to make a flexographic plate with small, e.g., 30μm halftone dots at a relatively low screen frequency, e.g., 85 lpi. A small section 301 of the platemaking master is shown, as is a cross section 303 of the corresponding section of the flexographic plate. The printing substrate, e.g. paper, is marked P. As described above with the help of FIG. 2A, the dots are not reliably printable.

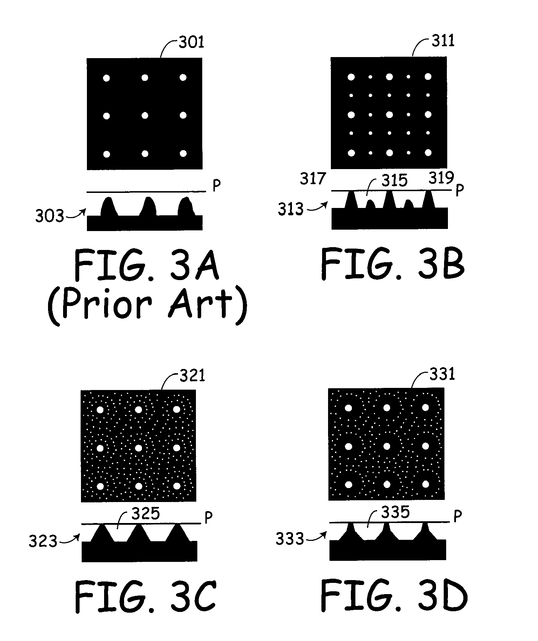

FIGS. 3B-3D show different embodiments of an aspect of the present invention that provides for exposure in the well regions by providing non-printable exposure dots in the well regions. The resulting wells are shallower than if no such exposure is provided.

FIG. 3B shows a platemaking master section 311 and a corresponding cross-section 313 of a corresponding section of a flexographic plate of a first embodiment according to which a screening pattern is made on the platemaking master using dots 317 of a first dot size designed to be printable, and using dots 319 of a second size designed to be non-printable. In one embodiment, the screening pattern is a multiple of the desired printed screen pattern. In the embodiment shown in FIG. 3B, it is twice the desired printable screen frequency. The presence of the dots 317 designed to be printable ensure that the smaller dots 319 are not printable even under pressure because such printable dots 317 provide support that prevents the non-printable dots 319 from reaching the substrate surface P. Because of the additional exposure provided by the platemaking master in the well region, the well region, e.g., region 315 between printable dots 317, is shallower than if no additional exposure is provided.

FIG. 3C shows a platemaking master section 321 and a corresponding cross-section 323 of a second embodiment of a flexographic plate, according to which, instead of small dots on a regular grid a multiple of the desired final grid being exposed in the well regions between printable dots, even smaller dots are spread in a random-like, stochastic pattern in the well region. In one embodiment for imaging on a digital imaging device such as an imagesetter that images by pixels, the size of the even smaller dots is one imagesetter pixel. The result again is shallower well regions, and one such shallower well is shown as well 325.

It is to be noted that at present, platemaking masters, e.g., films made for exposing flexographic plates are binary in that their transmittance is either a maximum to let the maximum amount of exposing energy through, or a minimum (maximum optical density on the film) to allow "no" exposing energy through. There is referred to these extremes as transmittance 1 and 0, respectively, and also to ON and OFF, respectively. Equipment to make a platemaking master, e.g., an imagesetter, is designed for so exposing binary platemaking masters. Photographic film, however, is capable of carrying a true gray-scale, and laser-exposing equipment is capable of intensity modulation. Therefore, another embodiment of the invention provides for exposing the well regions with less energy than the printable halftone dots by modulating the intensity of the radiation, either by using a film of transmittance between 0 and 1, or by modulating the digital platemaking master. Either case is called analog modulation of the well region.

The inventor discovered that when a stochastic pattern of very small dots is used for providing the additional exposure in the wells, the walls of the halftone dots are less steep than for the case of discrete dots shown in FIG. 3B. The same result is expected for the analog modulation method. While such dots are more reliably printable than steeper wall dots, they also provide a higher dot gain than may be desirable.

FIG. 3D shows a region 331 of a platemaking master, and the corresponding plate cross-section 333 for another embodiment in which a protected boundary region - called a guard interval, and also called a protective zone - is provided around each printable halftone dot boundary. No additional exposure is provided in the protective zone. The wells, e.g., well 335, are shallower than when no additional exposure is provided in the well regions, yet the inventor discovered that the shoulders of the halftone dots immediately beneath the print surface are less steep. The dots, however, remain strong.

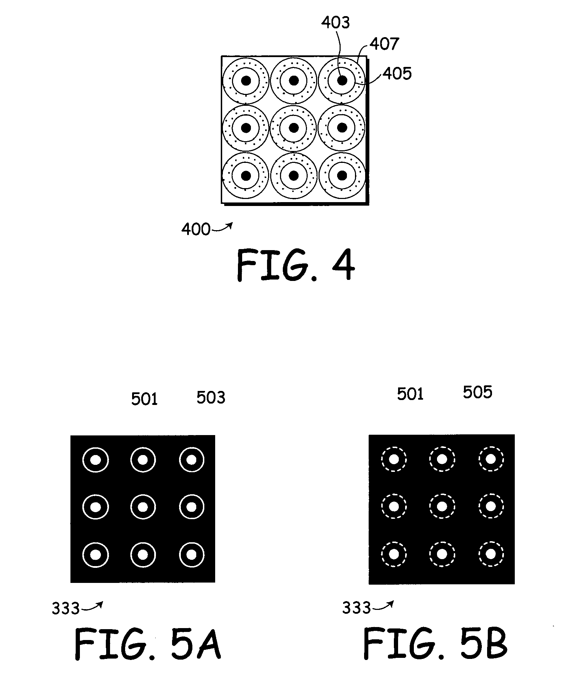

FIG. 3D shows one way of providing a protective zone around each printable halftone dot. FIG. 4 shows an alternate embodiment of providing a protective zone. FIG. 4 shows a negative 400 of a platemaking master in that areas that are to be exposed are shown in black. A halftone dot 403 is considered. There is a protective zone around the halftone dot defined by two circular boundaries 405 and 407. Within the non-protected region between the circular boundaries, a collection of small non-printable dots are placed in a stochastic pattern such that the well regions of the plate in highlight areas have additional exposure.

FIGS. 5A and 5B show two alternate embodiments of providing the additional exposure in the well regions with a protective zone around each printable small halftone dot. Each of these show platemaking masters. FIG. 5A is considered. Around each small printable halftone dot 501 is a ring 503 such of a width such that additional exposure is provided in the well region with no printing in such well region. The distance between the ring 503 and the printable small halftone dot 501 provides the protective zone. FIG. 5B shows a variation of the embodiment of FIG. 5A that includes exposing a broken line 505 in the case that it is found that for a particular flexographic process, the full circular line 503 of FIG. 5A provides too much exposure in the well region.

Thus, a method is described of providing for using a smaller halftone dot in flexographic printing. The smallest halftone dot size is called the minimum dot size herein. The plates that include a halftone screen with the minimum dot size, and the platemaking masters for producing the flexographic plates have also been described.

*Creating a smooth transition from highlights to midtones*

Another aspect of the invention is the frequency modulation of the minimum size dots for reproducing shades of gray less than that produced by the main screen with the minimum size dot. The main screen may be a classical screen, a stochastic screen, or any screen in between. The shade of gray produced by the main screen with the minimum size dot is called the ***first gray-scale threshold*** herein. By frequency modulation is meant modulating the tone levels by varying the number of printing halftone dots per unit area. For shades of gray higher than the first threshold, a screen having a plurality of halftone dots centered on an array that provides a desired screen frequency at a desired screen angle is used. This screen is called the *main **screen*** herein. Different shades of gray higher than the first threshold are produced by changing the size of the dots at the dot positions of the main screen, i.e., AM is used. FM is described further below. For the case of AM, it is desired that such larger dots print well, and also that the transition is smooth between the gray levels below (and at) the first threshold, i.e., those produced with the minimum dot size, and those produced using AM, otherwise vignettes and smooth variations in images may show banding or posterizing artifacts or both.

When there is additional exposure with non-printing dots, when the size of the printing dots is increased, if the additional non-printable dot pattern remains the same, at some stage, the printing halftone dots will start touching the created non-printing dots. This will make the shoulders of the printing halftone dots less steep, which in turn will lead to additional dot gain. Furthermore, the dot shape of the combination of the printing halftone dot and the non-printing dot may be less predictable and undesirable, possibly leading to even more dot gain and noise.

To avoid this potential artifact, in one embodiment of the invention, a protective zone is used around each printable halftone dot, the zone changing as the size of the printable halftone dot changes. In another embodiment of the invention, the amount of additional exposure provided for the well regions decreases as the printable halftone dot size increases, such that eventually, no additional exposure is provided in the well regions.

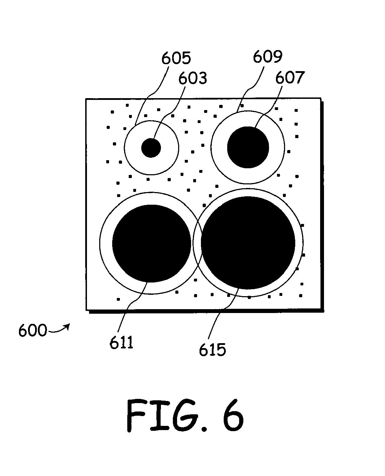

FIG. 6 shows one embodiment of the negative 600 of the platemaking master shown in FIG. 3D but with four different printable halftone dot sizes. The printable dot marked 603 is the minimum size printable dot as in FIG. 3D. The circle 605 is the boundary of the protective zone around halftone dot where no additional exposure is provided. Dot 607 is now considered, which is larger than the minimum size dot, used to create a higher dot percentage in a reproduction. In one embodiment of the invention, the protection zone is also larger. In the example shown, the boundary or border of the protective zone, circle 609, is larger. In one embodiment, the diameter of the outer border of the protective zone is increased linearly with the printable halftone dot size. In another embodiment, the distance from the edge of the dot to the outer border of the protective zone is maintained constant. In yet another embodiment, a non-linear monotonic relationship is maintained.

As the halftone dot size increases, the protective zones around two adjacent halftone dots start to overlap as is seen in FIG. 6 with the zones around dots 611 and 615.

Another embodiment not only increases the size of the protective zone as the dot size increases, but also reduces the amount of additional exposure provided in the non-protected zones of the well regions.

The inventor found that there is a printable dot size above which it is inadvisable to include any additional radiation in the well regions to ensure sufficient relief depth for all dot sizes. The relief depth typically has a minimum value for good printing, depending on the surrounding. Close to large halftone dots, for example, the wells can be shallow. In regions where the number of dots is relatively low, i.e., when the distance between dots is relatively large, the wells cannot be too shallow, else floor itself may appear in print. In a typical flexographic plate, close to large halftone dots, a relief depth of 120 micrometer is sufficient, while at a larger distance - up to 1 mm - from a larger dot, say larger 40 $\mu$m, relief depth should go up to 400 $\mu$m to avoid printing of the well region.

Thus, it is desirable to provide a higher frequency of dots that provide the additional exposure close to the printing dots rather than far away from the printing dots.

One of skill in the art can understand that similar variations of the protective zones with the printable halftone dot size can be implemented with the embodiments shown in FIG. 4, and FIGS. 5A and 5B. For example, the radii of the circles used increase with the printable dot size. In the case of the embodiment of FIG. 5B, the duty cycle of the dashing pattern also may be decreased as the dot size increases until there is no circle of additional exposure around halftone dots larger than a threshold size.

In such a manner, a smooth transition is achieved between printing using the minimum printable halftone dot size and larger halftone dots along the dot positions of the main screen.

*Using frequency modulation in the highlights*

Another aspect of the invention is the frequency modulation of the minimum size dots for reproducing shades of gray less than that produced by the main screen with the minimum size dot, i.e., shades below the first gray-scale threshold. In general, as above, the main screen may be a classical screen, a stochastic screen, or any screen in between. The method of generating the frequency-modulated screen includes providing exposure in the well regions between halftone dots such that the wells are shallower than if no exposure is provided for such well regions. In this manner, as described above, the minimum size halftone dot may be smaller than if no exposure is provided in such well regions.

There are various methods known for producing such frequency modulation below the first gray-scale threshold. One method is described in U.S. patent 5,766,807 to Delabastita et al., and another in U.S. Patent 6,445,465 to Samworth, incorporated herein by reference. In each of these methods, below the first gray-scale threshold, dots are effectively removed from the main screen according to the gray scale, thus producing a screen wherein, for gray-levels below the first gray-scale threshold, the number of dots per unit area is varied. The remaining dots are on the array points of the main screen.

One aspect of the present invention includes, instead of removing the dots at the array points of the main screen, reducing the size of these dots such that the dots are no longer printable. For producing photopolymer plates, the platemaking master for such a screen still provides exposure in the areas around the array points of the main screen whether or not the dots at the array points are printable or not. This provides for the dots remaining printable. Referring to FIG. 2B and FIG. 3B, if, for example, a 30$\mu$m dot is printable at 170 lpi, then frequency modulating the highlights for gray levels below that produced by the 170 lpi 30$\mu$m screen (FIG. 2B) until a minimum density of a 85 lpi 30$\mu$m dot screen (FIG. 3B) produces dots that are still printable, even with the small dot size, even though (suppose) a 85 lpi 30$\mu$m screen without the smaller non-printable dots at the 170 lpi screen frequency would not be printable.

For the making of screens using a digital or film platemaking master, this provides the additional exposure between the printable dots to make the printable dots reliable.

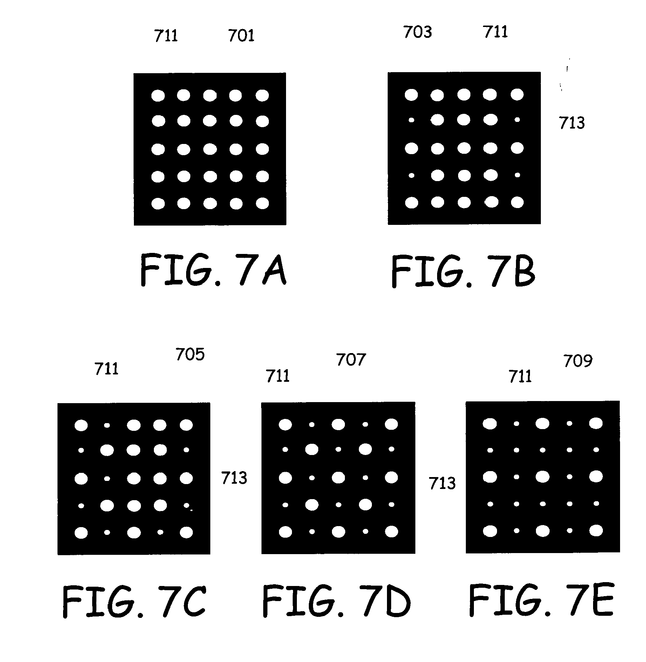

FIGS. 7A to 7E respectively illustrate five platemaking masters 701, 703, 705, 707, 709 that include frequency modulation for gray levels lower than the first gray-level threshold using a selected minimum size halftone dots size, according to an embodiment of the invention. FIG. 7A shows a platemaking master 701 for main screen at the first gray-level threshold. The frequency modulation shown in the platemaking masters 703, 705, 707, 709 of FIGS. 7B through 7E reduces the number of printable minimum size halftone dots 711 in each respective platemaking master 703, 705, 707, 709 by replacing some of the printable halftone dots 711 with "non-printable dots" 713 such that using the platemaking master 703, 705, 707, 709 provides additional exposure in the well regions between the printable dots 711. It is to be noted that the smaller "non-printable" dots 713 are visible in the platemaking master 703, 705, 707, 709, but do not print.

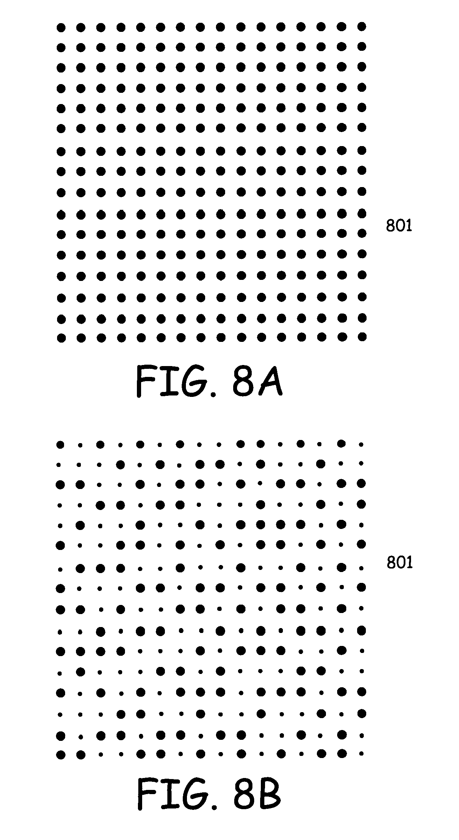

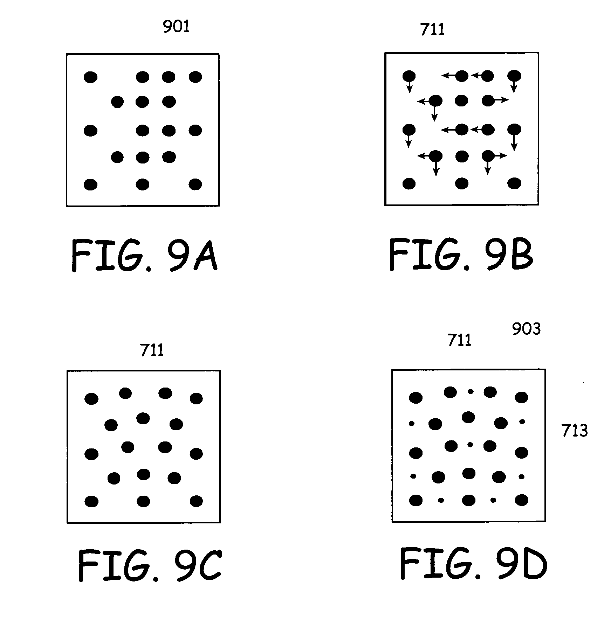

FIGS. 8A and 8B are a modification of FIGS. 8 and 9 of U.S. Patent 6,445,465 to Samworth. These figures show the negative of platemaking masters using the method of U.S. Patent 6,445,465 modified to include replacing printable dots rather than removing printable dots, such that smaller printable dots may be used. FIG. 8A shows a screen at the first gray-level threshold using the minimum size dot. FIG. 8B shows the negative of a platemaking master for making a screen in which about 50% of the printable minimum size dots 801 have been replaced by a smaller non-printing dot 803 to provide additional exposure in the well regions between the printable dots 801.

The inventor has found that the embodiments wherein the printable dots 801 are replaced by non-printable dots 803 for reproducing gray levels below the first threshold sometimes produce undesired unattractive transition patterns.

An improved embodiment includes, instead of simply replacing the printable dots 801 with non-printing dots 803, further displacing the printing dots 801 from their position in the higher density screen to more evenly distribute the printable dots 801. Therefore, in one embodiment, the printable halftone dots 801 in areas that are to be reproduced for shades of gray below the first pre-determined threshold are positioned so that at least some of the dots 801 are not centered on points of the array of the main screen.

In other words, one embodiment is a platemaking master wherein the plate includes a first set of one or more areas for reproducing a gray level that is higher than a minimum gray level and less than a threshold gray level. The plate further includes a second set of one or more areas for reproducing a gray level that is higher than the threshold gray level. For reproducing a gray level between the minimum gray level and the threshold gray level, the number of printable dots per unit area varies according to the gray level, and for reproducing a gray level higher than the threshold gray level, the size of the printable dots varies according to the gray level. In an area for reproducing a gray level between the minimum gray level and the threshold gray level, the printable dots are not necessarily in the same location as corresponding printable dots in an area for reproducing a gray level higher than the threshold gray level.

FIG. 9A is the halftone pattern 901 that would be produced by the platemaking master 705 of FIG. 7C. FIG. 9B shows as arrows the desired direction of shifts of the printable dots 711 in order to more uniformly distribute the dots to provide a more pleasing pattern. The distance of displacement is such that each printable dot 711 at the main screen array position is repelled by an adjacent printable dot. The absence of a printing dot 711, i.e., presence of a non-printing dot 713 thus defines a "hole" that causes attraction to an adjacent printable dot 711 at the main screen array position. FIG. 9C shows the printable dots 711 moved according to the method. A displacement factor is defined that describes the average distance a dot 711 is displaced. FIG. 9D shows the negative of the resulting platemaking master 903, with the smaller, non-printable dots 713 in the well regions between printable halftone dots 711 in the case there was a printable dot between these printable dots in the main screen array for the first threshold gray level.

As the dot percentage of the FM modulated dots increases, the amount of shift (the displacement factor) is reduced such that there is a smooth transition from the FM modulated screen to the main screen. One method of creating such displacement is described in more detail below.

It is to be noted that in each of the above-described embodiments, smaller non-printing dots are provided in the platemaking master for increasing the exposure of the regions between printable dots, with one non-printing dot per printing dot that is missing compared to the main screen at the threshold gray-level. Those skilled in the art will understand that these methods instead can include any of the alternate methods of providing the additional exposure, including providing randomly oriented non-printing dots, and optionally including a protection zone around each printable dot.

*Solid rendition and the shadow contrast*

Another aspect of the invention is achieving good solids rendition in a flexographic screen. Solid rendition is a well-known problem in flexography. For example, it is known that for a large region intended for 100% ink coverage, uniform ink distribution is hard to achieve. Solid areas sometimes show a "halo" in reproductions, and areas intended for solid coverage often seem lighter than areas with, say, a screen between 95% and 98% coverage. Upon examination, parts of the substrate intended for 100% coverage may end up not covered with ink, even when excessive amounts of ink are transferred.

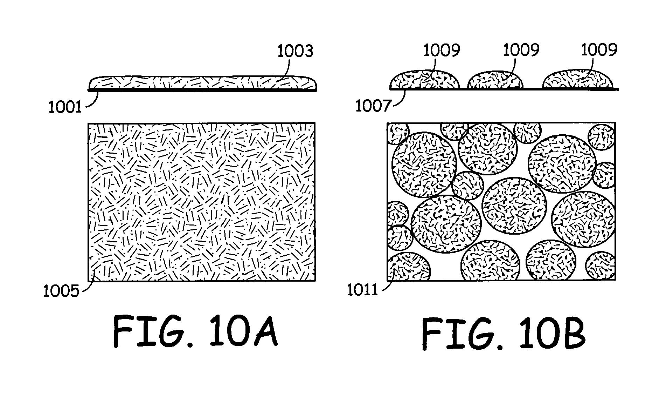

Research has shown that for some substrates and some inks, the ink does not adhere well to a relatively large relief area of the plate that is for solid transition. The ink, for example, may create drops instead of covering the desired surface. FIG. 10A shows in a simplified form relief area 1001 with ink 1003 uniformly and thinly distributed on the relief area 1001 to produce a uniform solid rendition 1005. FIG. 10B shows what often happens in practice with many difficult substrates and inks: the ink does not cover all of the substrate, and droplets such as 1009 are formed on the relief area 1007. The resulting reproduction 1011 shown in FIG. 10B has an overall lower density. However, the ink thickness in the droplet areas is more than in the uniform case, such that while the overall density is lower, there are spots with higher density than what you would get if the ink were uniformly distributed.

One aspect of the invention is a plate that is intended for solid rendition. Another aspect of the invention is creating a smooth gradation between a screened gray scale and solid rendition.

Above described and incorporated herein by reference U.S. Patent 6,213,018 describes a method of adding small, e.g., circular cells at a very high frequency to solid areas of a plate. The cells are added to the platemaking master such that there is no exposure at the cell locations. Thus, the relief of a plate in a solid rendition area has holes in the shape of these cells. The cells are arrayed in a pattern to match the pattern of ink carrying cells in an ink metering roll used to ink a flexographic plate. In this manner, the ink from the metering roll is transferred to the cells in the solid rendition parts of the plate. U.S. Patent 6,492,095 to Samworth, incorporated herein by reference, extends the method of U.S. Patent 6,213,018 to screened rendition, such that the cells are also added to the relief parts of halftone dots. The cells are again matched to the ink-carrying cells of an ink metering roll, such that after the plate is inked, the cell regions on the plate are designed to carry ink. Such cells are at a relatively high frequency. Samworth, the inventor, mentions in U.S. Patent 6,213,018 that the cells are arrayed at a frequency at least three-times that of the halftone screen.

Embodiments of the present invention improve solid rendition by adding sets of grooves (line patterns) to parts of the plate intended for solid transition. The inventor found that adding such grooves improves solid transition. The grooves are designed to not carry ink. In general these line patterns, because they are meant for not carrying ink, are called ***"perforations."*** It is believed that the improved solid rendition occurs because the grooves of the perforations create a large surface for dot gain effects, and also prevent ink from floating freely, preventing large drops of ink to form. Whatever the reason, so adding perforations was found to be beneficial. For example, the inventor found that often, less ink was transferred than using prior art methods, even though the solid rendition was improved over having a simple constant relief. Thus, embodiments of the invention seem to provide good solid rendition and ink savings.

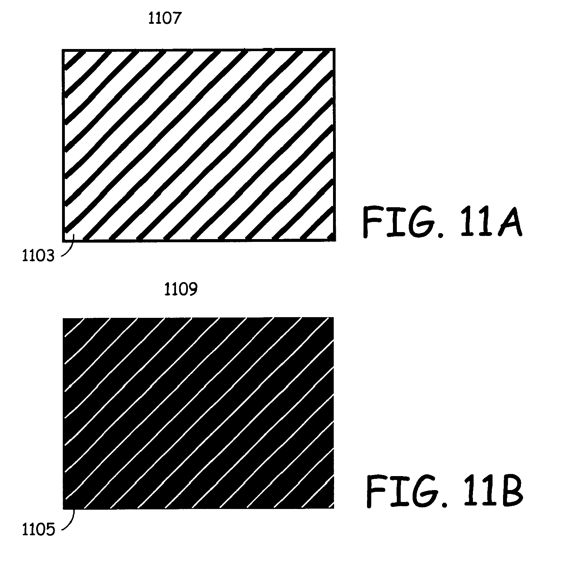

As can be seen in FIG. 11A shows a section 1103 of a platemaking master for a plate that is to render solid in this section, and FIG. 11B shows the corresponding part 1105 of a reproduction using a plate made with platemaking master section 1103. The platemaking master is transparent except for a relatively high frequency line pattern of relatively thin lines 1107. Such a line pattern is called a *line screen pattern* herein. The cause of dot gain, the lines 1107 of the line screen pattern are so thin in the reproduction so as to be almost invisible so that the reproduced area appears approximately 100 % covered. FIG. 11B shows the white lines 1109 in exaggerated manner; in practice, they would be close to invisible. In an experiment, a solidly transparent platemaking master such as shown in FIG. 10B produced a reproduction of density 1.05, while the platemaking master of FIG. 11A reproduced the reproduction of FIG. 11B with a density of 1.25.

Thus, the inventor has discovered that a non-100 % density prints darker than a fully solid area. This discovery may be used in a method to provide an improved contrast reproduction of an image by determining, e.g., experimentally, a non-100 % density, denoted Ddark, which prints darker than the full solid of an ink. The method includes mapping the highest gray-level in the artwork to the determined density Ddark, mapping lower gray-levels in the image to densities lower than Ddark, and using the mapped densities to create a relief plate to use for printing.

For an embodiment using a line pattern that is periodic in at least one direction, the parameters are the frequency of the periodicity, the angle to the printing direction, and the thickness of the lines. From experiments, it was found that line patterns periodic in at least one direction at a relatively high frequency, e.g., at least 200 per inch in at least one direction, and rotated over angles close to 45 degrees to the printing direction provide the best coverage. For example, a line screen of at least 200 lpi at approximately 45 degrees to the printing direction provided good solid rendition. The inventor has found that a perforation pattern at between 20 and 70 degrees to the printing direction works reasonably well. Other directions, including 0 degrees and 90 degrees often also improve solid rendition but typically to a lesser degree than 45 degree lines.

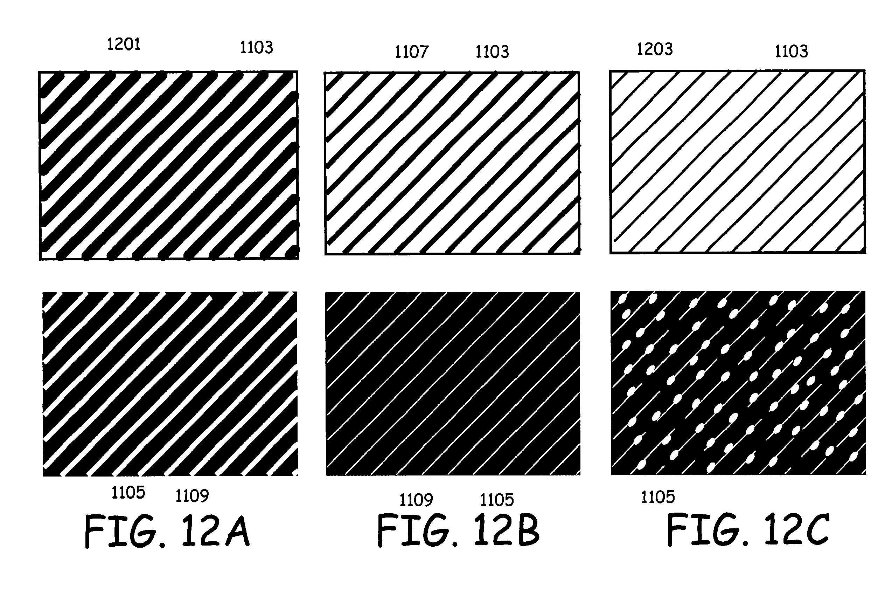

In the preferred embodiment, the line thickness is chosen such that the dot gain will almost fully fill in the lines 1109 in a reproduction, without totally filling them in. Experiments have shown that making the lines 1107 even thinner will lead to the lines 1109 filling in a reproduction. However, the solid rendition doesn't become better, on the contrary. When the lines 1107 totally fill-in, the solid surface becomes too large in that the ink starts forming drops again in a reproduction. This is shown for a line screen perforations pattern in FIGS. 12A, 12B and 12C that each show a platemaking master section 1103 and a corresponding reproduction 1105 using a plate made from the platemaking master. In FIG. 12A, the lines 1201 are thicker than the ideal. The resulting reproduction has an optical density of 0.9. FIG. 12B, shows the situation of FIGS. 11A and 11B, wherein the lines 1109 almost fill, with the resulting reproduction having an optical density of 1.25. FIG. 12C includes lines 1203 that are so thin that droplets of ink start to appear in the reproduction 1105. The resulting reproduction 1105 has an optical density of 1.12.

The plates themselves thus have relatively thin grooves as line patterns in areas for solid region reproduction. The grooves are intended to not receive ink by the inking system used to ink the plates. Experiments showed that for typical flexographic plates, the grooves have a thickness of between 5 and 60 micrometer, and more particularly, thickness of between 10 and 50 micrometer.

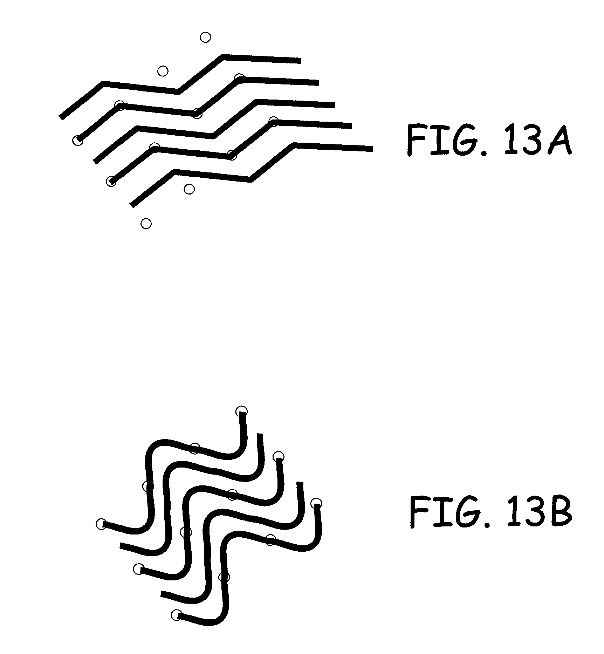

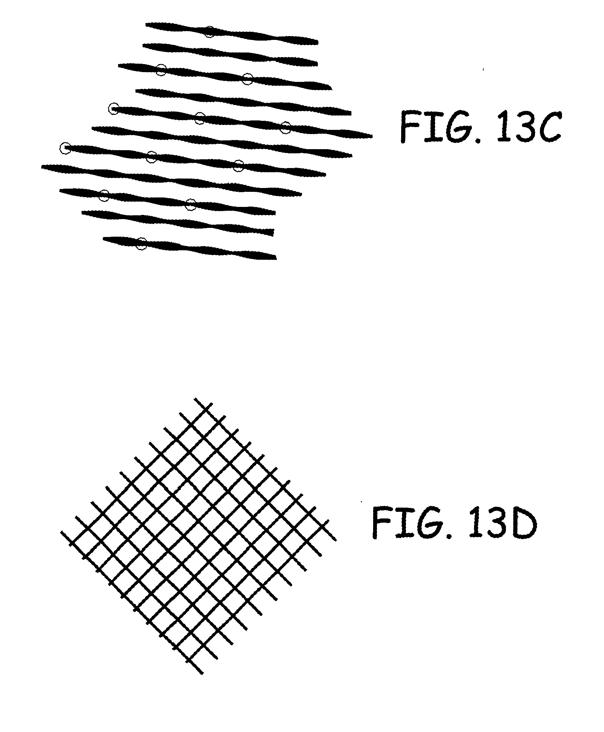

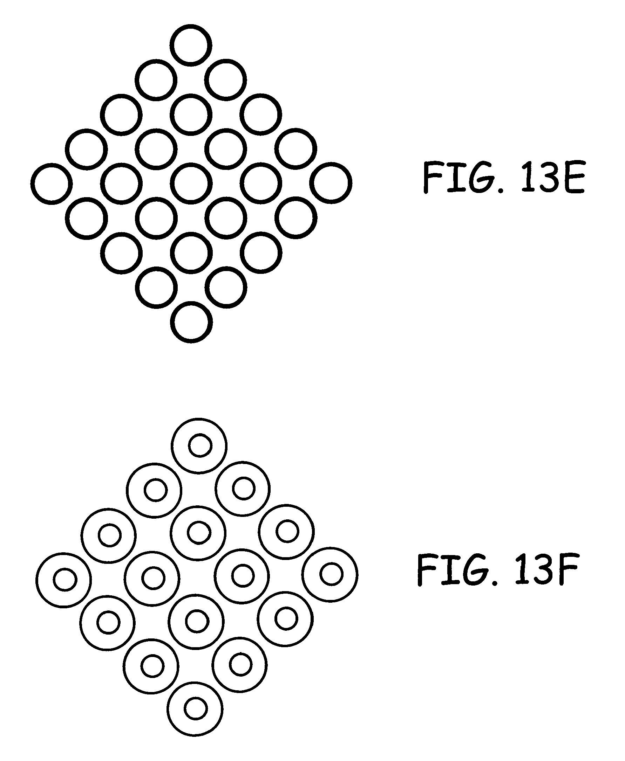

Different embodiments use different line pattern or other perforation patterns. For example, sets of cross hatches may be used rather than lines. Alternate shapes also may be used. FIGS. 13A-13F respectively show six alternate patterns: as follows. A: FIGS. 13A shows a jagged line pattern, also called a zig-zag line pattern, FIGS. 13B shows a wave line pattern, FIGS. 13C shows a line pattern wherein the lines are not of constant thickness, FIGS. 13D shows a cross-hatch, FIGS. 13E shows a first pattern of periodic circular lines, and FIG. 13F shows a second periodic pattern of pairs of circular lines. Each of FIGS. 13A-13C also shows, as small circles, the location of printing halftone dots when such are included. Many other patterns may be used, including broken line versions, and all sorts of shapes as can be imagined by those skilled in the art. The main aspect is the characteristics of the line patterns, such as the line thicknesses and how many lines or line patterns are included per unit area.

Other shapes that might be used include a set of grooves that forms a stochastic dot pattern similar in appearance to the perforations of U.S. Patent 6,532,082 to Dewitte, the inventor of the present invention. U.S. Patent 6,532,082 is incorporated herein by reference, and discloses a method called the "Original Dewitte Method" herein, that is applicable for offset printing and that improves contrast and printability by modulating a halftone screen with a second stochastic screen pattern to provide a screen in which halftone dots contained non-ink-carrying microscopic dots (also called perforations) in a stochastic pattern. The Original Dewitte Method, however, was not aimed at flexography. It would be clear in the art how to modify the Original DeWitte Method for solid rendition in flexography, e.g., by ensuring that the size of the perforations is such that the thicknesses of the perforations and the number per unit area is selected for improving solid rendition in flexography. Thus, one version of the invention is the case of the line pattern perforations forming a stochastic pattern.

Thus, one aspect of the invention is a relief plate with perforations in the areas for solid rendition. Another is a method of including such perforations in a platemaking master for making a plate. Yet another aspect of the invention is including such perforations in the solid area together with a screen pattern for less than solid rendition such that there is a smooth transition between solid rendition and non-solid areas, such that there is a pleasing rendition of contrast in the shadow areas.

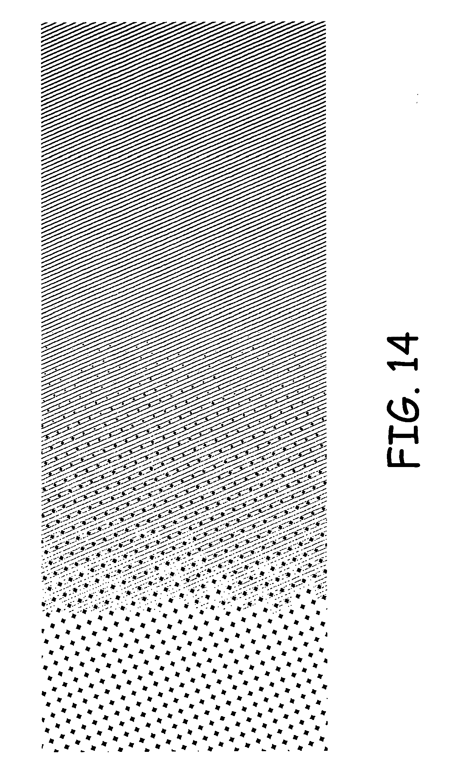

Using a method embodiment described herein, with straight-line perforations, FIG. 14 shows a platemaking master for producing a plate segment that would reproduce a smoothly varying region from 80% to solid (100%) coverage.

*Embodiment for producing platemaking masters*

Several embodiments are now described for producing platemaking masters for making flexographic plates that include one or more of the aspects of the invention described above.

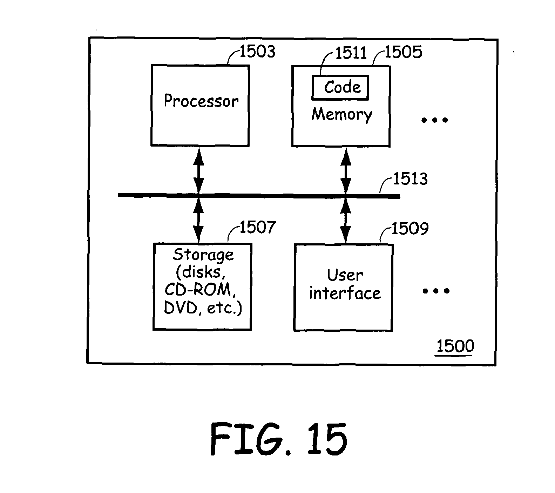

Such method embodiments may be implemented in a processing system 1500 such as shown in FIG. 15. FIG. 15 shows one configuration of processing system 1500 that includes at least one programmable processor 1503 coupled to a memory subsystem 1505 that includes at least one form of memory, e.g., RAM, ROM, and so forth. A storage subsystem 1507 may be included that has at least one disk drive and/or CD-ROM drive and/or DVD drive. In some implementations, a display system, a keyboard, and a pointing device may be included as part of a user interface subsystem 1509 to provide for a user to manually input information. Ports for inputting and outputting data also may be included. More elements such as network connections, interfaces to various devices, and so forth, may be included, but are not illustrated in FIG. 15. The various elements of the processing system 1500 may be coupled in various ways, including via a bus subsystem 1513 shown in FIG. 15 for simplicity as a single bus, but will be understood to those in the art to include a system of at least one bus. The memory of the memory subsystem 1505 may at some time hold part or all (in either case shown as 1511) of a set of instructions that when executed on the processing system 1500 implement the step(s) of the method embodiments described herein. Thus, while a processing system 1500 such as shown in FIG. 15 is prior art, a system that includes the instructions to implement aspects of the present invention is not prior art, and therefore FIG. 15 is not labeled as prior art.

It is to be noted that the processor 1503 or processors may be a general purpose, or a special purpose processor, and may be for inclusion in a device, e.g., a chip that has other components that perform other functions. Thus, one or more aspects of the present invention can be implemented in digital electronic circuitry, or in computer hardware, firmware, software, or in combinations of them. Furthermore, aspects of the invention can be implemented in a computer program product tangibly embodied in a carrier medium carrying machine-readable code for execution by a programmable processor. Method steps of aspects of the invention may be performed by a programmable processor executing instructions to perform functions of those aspects of the invention, e.g., by operating on input data and generating output data.

Some aspects of the method embodiments to generate platemaking master data use steps that are similar to steps described in U.S. Patent 6,532,082 to inventor Dewitte, the inventor of the present invention. U.S. Patent 6,532,082 is incorporated herein by reference, and discloses a method, called the "Original Dewitte Method" herein, for offset printing that improves contrast and printability by modulating a screen with a second stochastic screen pattern to provide a screen in which halftone dots contained non-ink-carrying microscopic dots (also called perforations) in a stochastic pattern. The Original Dewitte Method, however, was not aimed at flexography.

For flexographic printing, the descriptions of the data to be printed typically arrive in the form of page descriptions in a page description language (PDL) such as PostScript or PDF, both from Adobe Systems, Inc., of San Jose, California, or some other PDL, such as GRO, a proprietary language used by Esko-Graphics, of Gent, Belgium, the applicant of the present invention. The PDL descriptions are processed by a raster image processor ("RIP") for output to an imagesetter in the case of film output, or a platemaker, in the case of a computer-to-plate system. The separate images may be in the form of bitmap files or film. If the images are supplied as film, these films may be scanned in high resolution. This is necessary, for example, in computer-to-plate systems. In any case, the inclusion of the separately supplied images may be carried out separately from the standard RIPing of PDL data.

One aspect of the present invention is producing a platemaking master that provides additional exposure in the well regions for highlights. Another is producing a platemaking master that includes perforations in the form of line patterns in the areas for solid rendition. According to some of the different aspects of the present invention, the perforations and/or provision for additional exposure can be added to the data for output at three different points in the workflow. These correspond to three main alternative embodiments of the method of the present invention, described herein.

1. The perforations and/or provision for additional exposure can be added to the result of the RIPing process. The result of a RIPing process is typically a bitmap that can be written in a file or be sent directly to an output device. Adding the perforations and/or provision for additional exposure can be achieved by processing a bitmap file or by processing a RIP output sequence of bits in, for example, a RAM buffer, through setting selectively bits in the bitmap to 0 (0 in such a case indicating no image).

2. The perforations and/or provision for additional exposure can be added by using a special part of the RIPing process.

3. The perforations and/or provision for additional exposure can be added before RIPing as operations on the page description of the original design.

Although only these three alternatives are described in detail herein, other alternatives for producing a plate with perforations, the plate produced with a single exposure, would become clear to those of ordinary skill in the art. The choice between these methods is dependent on the user's workflow, the user's equipment and on the quality requirements. In some cases, a combination of different methods will be chosen.

*An embodiment for producing platemaking masters using overlaying bitmaps*

A first embodiment includes combining a plurality of bitmaps to produce a platemaking master. A plurality of bitmaps may be added to produce a platemaking master for providing the additional exposure in the well regions in highlight regions, a plurality of platemaking masters may be added to produce a platemaking master for adding the perforations in the solid areas, or a plurality of platemaking masters may be added to produce a platemaking master for adding the perforations in the solid areas and for providing the additional exposure in the well regions in highlight regions.

The method includes, e.g., producing a first bitmap of the source image using a first screening method that uses a first screen pattern which, in one embodiment, is a conventional screen pattern, e.g., a stochastic screen, a classical screen, or something in between. A classical screen is assumed in the discussion. For multicolor printing, for each ink color, the conventional screen pattern is for the ink color at the appropriate angle for the ink color.

In one embodiment, the method further includes creating a second bitmap that includes an additional exposure pattern to provide additional exposure for the wells regions of the first screen pattern in the highlight region of the source image. Different embodiments use different additional exposure patterns. It is desirable that the additional exposure pattern does not create moiré with the first screen pattern. In embodiments wherein the additional exposure pattern is similar to a screen pattern, this avoiding moiré patterns can use any known method for avoiding moiré between two screens, and such methods are well known to those skilled in the art.

In one embodiment, the second bitmap for the additional exposure pattern is a conventional screen with a low dot percentage and at a frequency significantly higher than that of the first screen. In one version, the frequency of the additional exposure pattern is a multiple of the frequency of the first screen, and the angle is the same angle. In an alternate embodiment using a conventional screen for the additional exposure bitmap, the angle between the first screen and light addition screen is approximately 45 degrees, and the screen frequency of the additional exposure pattern is sqrt(2) higher than that of the first screen.

In an alternate embodiment, the second bitmap for the additional exposure pattern has a stochastic pattern, using a stochastic screen at a low dot percentage. Because stochastic screens may form undesired effects at low dot percentages, an improved stochastic screen may be used that includes displacing the pattern to be evenly spread.

One method of producing such an evenly distributed pattern includes determining an initial stochastic pattern at the required dot percentage level, and then redistributing the dots within the initial stochastic pattern. One method for carrying out such a redistribution comprises a computer program which performs the following steps on a pixel map that includes such a stochastic pattern:

1. Define a displacement factor; initialize a mean displacement variable and a maximum displacement variable, where displacement is between all pairs of nearest neighbors.

2. For each dot in the initial stochastic pattern,
   (a) for the undisplaced dot, and the eight one-pixel displacements (left or right and/or up or down by one pixel) of the dot, examine the distance from the dot to the nearest neighbor, and if there is a displacement that gives greater distance to the nearest neighbor, displace to that location of the eight displacements giving greatest distance from the dot to the nearest dot;
   (b) update the average displacement variable if changed and the maximum displacement variable, if changed, with new values of the average displacement and maximum displacement, respectively, between all pairs of nearest neighbors; and

3. If the maximum displacements for all dots is greater than the displacement factor times the mean displacement between any two dots, repeat step 2, else stop.

Several alternatives to the above method of further dispersing dots are possible. For example, one might continue step 2(a) above until the variance or variance squared of the distance between pairs of nearest neighbors falls below some predefined threshold.

An improved embodiment uses patterns of dots for additional exposure that have a higher frequency closer to a printing halftone dot, but with a small protection zone of say 2 or 3 pixels such that the additional exposure (non-printing) dots never touch a printing dot. One version creates additional exposure dots positioned in circles around the printable halftone dot, with a decreasing dot frequency further from the printing dot, and also as a function of the distance to the closest neighboring printing dot.

First it is to be noted that by having a pixel (or dot) "ON" is meant producing a transparent pixel (or dot) in the platemaking master, and by "OFF" is meant producing an opaque pixel (or dot) where no light is transmitted by the platemaking master.

The method includes:

a) For each OFF pixel in the first bitmap, calculate a density value by summing up the effect of ON pixels in a neighborhood of a pixel. In one embodiment, the neighborhood is defined by a circle around the OFF pixel. Each ON pixel contributes with a weighting factor that decreases as the distance increases between the current white pixel and the black pixel in the neighborhood. This creates a multi-bit image, e g., an 8-bit image.

b) Screen the resulting multi-bit image with a stochastic screening method to produce a screened bit map for additional exposure. There will be more stochastic dots in the areas of lower gray levels.

c) Delete all little dots (non-printable) dots within a protection zone around the existing printing dot to produce a final second (additional exposure) bitmap.

One embodiment of step c) includes:

For each pixel:

c1. If the pixel is switched ON in the original (first) bitmap, keep it switched ON.

c2. If the pixel is switched OFF in the original (first) bitmap, ascertain whether or not the corresponding pixel is ON in the additional exposure pattern's bitmap.

c3(a). In case the corresponding pixel is OFF in the additional exposure pattern's bitmap, leave it OFF.

c3(b). In case the corresponding pixel is OFF in the additional exposure pattern's bitmap, and not in the original bitmap, ascertain whether there is another pixel switched ON in the original bitmap in a first neighborhood of the pixel. In one embodiment, the first neighborhood consists of all the pixels within a first pre-selected distance, denoted D1, of the pixel. If at least one of the pixels in the first neighborhood is switched ON, have the pixel be OFF in the combined bitmap. If all pixels in the first neighborhood are switched OFF, then switch ON the pixel. Typical distances for D1 are 50 - 100 micrometer.

The method further includes combine the first bitmap (screen pattern) with the second bitmap that includes the additional exposure pattern. One simple embodiment uses the OR function. The combining according to the simple embodiment includes switching each pixel ON if the corresponding pixel of either or both of the first and second bitmaps is ON. A disadvantage of the first embodiment is that the additional exposure pattern may touch the original printing dots. The method, however, still works.

A second combining step embodiment includes:

For each pixel:

1. If the pixel is switched ON in the original (first) bitmap, keep it switched ON.

2. If the pixel is switched OFF in the original (first) bitmap, ascertain whether or not the corresponding pixel is ON in the additional exposure pattern's bitmap.

3(a). In case the corresponding pixel is OFF in the additional exposure pattern's bitmap, leave it OFF.

3(b). In case the corresponding pixel is OFF in the additional exposure pattern's bitmap, and not in the original bitmap, ascertain whether there is another pixel switched ON in the original bitmap in a first neighborhood of the pixel. In one embodiment, the first neighborhood consists of all the pixels within a first pre-selected distance, denoted D1, of the pixel. If at least one of the pixels in the first neighborhood is switched ON, have the pixel be OFF in the combined bitmap. If all pixels in the first neighborhood are switched OFF, then switch ON the pixel. Typical distances for D1 are 50 - 100 micrometer.

An advantage of the embodiment that includes steps 1-3 is guaranteeing that no additional exposure is provided at the edges of linework that provides for accurately reproducing fine linework.

In one embodiment, a further step 4 as follows is added to ensure that fully white regions are not provided with additional exposure:

4. Prior to switching ON a pixel that was switched OFF in the original bitmap, ascertain whether or not there is at least one pixel switched ON in the original bitmap in a second neighborhood of the pixel, larger than the first neighborhood. In one embodiment, the second neighborhood consists of the pixels within a distance D2 of the pixel. A typical value for D2 is 2mm.

The combining of the first and second bitmaps provides the additional exposure in the well regions of a platemaking master to improve rendition in the highlight areas, and provides, for example, for using small halftone dots that might otherwise not be reliably printable.

One embodiment of the method further includes for improving the shadow areas and improving solid rendition by including line pattern perforations. Thus, a third bitmap that includes the perforations is created. The perforations will be opaque regions in the platemaking master that are for not carrying ink in the final relief plate.

It is to be noted that while the embodiment described herein combines the first and second bitmap to produce a first combined bitmap, and then combines the first combined bitmap with the third, perforations bitmap, an alternate embodiment combines the original first bitmap with the perforations bitmap, i.e., no additional exposure bitmap is included.

Thus, the steps described below, by "original bitmap" and "original pattern" are meant either first combined bitmap and the resulting pattern if the above combining is included, or the first bitmap and first screen pattern, respectively.

The combining uses the NOR function as follows.

For each pixel:

1. If a pixel is switched OFF in the original pattern, it remains switched OFF.

2. If a pixel is switched ON in the original pattern, and it is switched ON in the perforation pattern, switch the pixel OFF, else leave the pixel switched ON such that the solid areas include the reverse of the perforation pattern.

In one embodiment, a protection zone where no perforations occur is included. The method then further includes:

3. If a pixel is switched ON in the original pattern and it is switched ON in the perforation pattern, then only switch the pixel OFF if no pixel in a neighborhood of the pixel, e.g., within distance D around the pixel, is switched OFF in the original pattern. Typical distances for D are as for D 1 above.

The method of combining the bitmaps is typically carried out in software on a processing system.

A non-computerized combining method also is described and produces similar results:

1. Use a RIP and imagesetter to create a negative film of the artwork to be reproduced. This film, denoted film_1 herein, is the normal film one would use in non-digital flexography to create a flexographic plate.

2. Copy this film negative as positive to a new film. Do not yet develop the film. This film is denoted film_2.

3. Make or provide another film, denoted film_3 herein, with a negative stochastic pattern. In one embodiment, film_ 3 has 10 % dots at 10 micrometer.

4. Copy this film_3 onto film_2. Film_2 now will be light where either film_1 OR film_3 transmitted light.

5. Develop film_2.

6. Copy film_2 as a positive to a negative. When developed, this is a negative film ready for flexographic platemaking.

This method can further be improved by creating yet another intermediate film with a platemaking master to prevent creating light addition particles too close to the real printing dots or in big white areas. This extra film can be created with a RIP from the original artwork using dot gain compensation. It is clear by now that, although the non-computerized way works, it is far more laborious and it does not give the same control as the software method.

Although the best contrast and color gamut is obtained when both the additional exposure is provided in the wells of highlight regions, and the perforations are added in the solid and shadow regions, embodiments may use only one of the aspects.

For example, for a printing process is already able to produce good highlights, one can only add the line pattern perforations. For cases where there is already good solids and shadow rendition, e.g., with so called soft plates, one can add only the aspect that provides for using smaller dots.

*Embodiment using bitmap lookup table screening*

A second method provides the additional exposure in the well regions for highlights, and/or the perforations for shadow or solid regions during as part of the RIPing process, and thus may be faster. One special version of the set of bitmaps is described that is convertible to a threshold array.

**Background to screening methods**

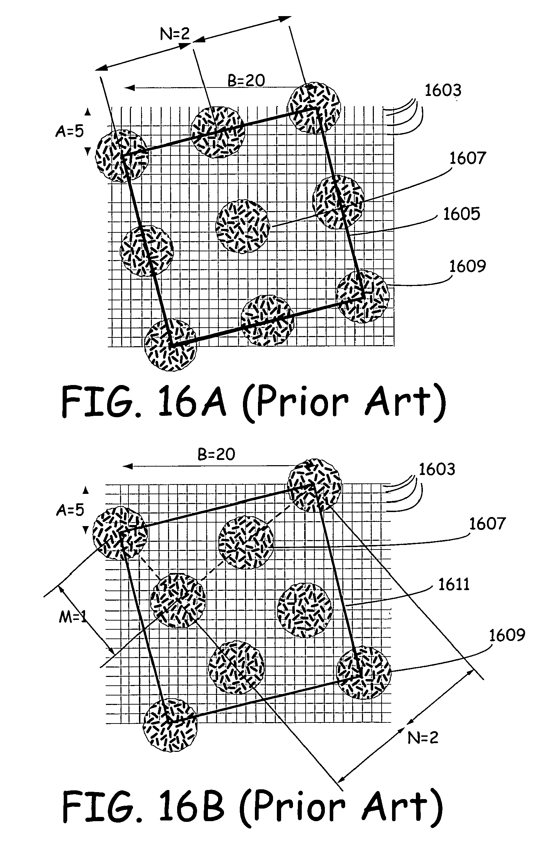

One embodiment of the generation of the regions of additional exposure and/or the addition of line pattern perforations in the digital halftone is done at the level of generation of a repeating screen supercell. In this description, a supercell is defined as follows, with the aid of FIGS. 16A and 16B. Two versions are shown in FIGS. 16A and 16B, respectively. For each screen, a big repeating tile, indicated by square 1605 in FIG. 16A, and square 1611 in FIG. 16B, respectively, is defined through two integer numbers *A* and *B*. The vector *(A,B)* is the vector from the top left corner to the top right corner of the square. The small grid 1603 indicates the fundamental resolution, *i.e.*, the pixel size of the output device, *e.g.*, an imagesetter, and *A* and *B* thus are measured by a number of pixels.

Halftoning using a supercell is known in the prior art, but not halftoning that includes line pattern perforations in the shadow and solid parts, or that produces a platemaking master that provides for additional exposure in the well region of highlights.

FIGS. 16A and 16B therefore are labeled prior art, and are prior art when no line pattern perforations or provision for additional exposure are intentionally present in the results. First FIG. 16A is considered. The square defines a repeating tile 1605, and some of the pixels within the tile 1605 are rendered ON, while others are OFF. The ON pixels, for example, may form a set of halftone dots, and one such halftone dot is labeled 1607. Another is labeled 1609. Halftone dot 1607 is completely within tile 1605, while only part of dot 1609 is within the tile. The remaining parts of dot 1609 are generated by the neighboring repetitions of tile 1605. Tile 1605 is thus filled with complete and partial halftone dots, and is called a *supercell.* Repeating the supercell in both directions fills an image (the output film or plate) with a complete halftone pattern.

FIG. 16A shows one variation of a supercell. The halftone dots in the tile are placed parallel to the direction of the tile defined by vector *(A, B)*. In this case, *A*=5 and *B*=20, as shown. The halftone dots are along an angled regular grid at some period, and the number of periods along any side of the rectangle 1605, is an integer, denoted by *N*. In the example shown, *N*=2. A supercell of this type is characterized by three numbers: *A, B* and *N,* which are each an integer. *A* and *B* define the angle and the size of the supercell, while *N* defines the linear number of halftone dots per supercell.

The following formulae hold for the resulting screen:

$$period = \frac{\sqrt{A^2 + B^2}}{N} \text{ in pixels,}$$

$$ruling = \frac{resolution}{period} = \frac{(ppi) * N}{\sqrt{A^2 + B^2}} \text{ in lines per inch,}$$

and

$$angle = \arctan\left(\frac{A}{B}\right).$$

The resolution, denoted *ppi*, is the number of pixels per inch, and the angle is measured counterclockwise from the horizontal.

Another type of supercell, shown in FIG. 16B, does not have the halftone dots placed in the direction of the repeating tile, but pre-angled to the tile. The corners of the tile, however, are still at the centers of halftone dots. The angle of the halftone grid to the tile is given by two integer numbers *M* and *N,* which are obtained by drawing a right-angle triangle with vector *(A, B)* as the hypotenuse, one side going down and to the right from the top left hand corner of the tile, and another side going down and to the left from the top right hand corner of the tile, these sides passing through the centers of the halftone dots and meeting at a right angle. Integer *M* is the number of halftone dot periods of the side from the top left tile corner to the right-angle, and integer *N* is the number of halftone periods of the side from the top right tile corner to the right angle. In the example of FIG. 16B, *M*=1 and *N*=2. The angle of the halftone dots to the supercell tile is arctan(*M/N*). The supercell of FIG. 16A may be considered a special case (*M*=0) of the same type of supercell as shown in FIG. 16B.

Such supercells are thus defined by the four numbers *A, B, M* and *N.* These types of supercells (but without line pattern perforations for dark regions, or additional exposure in the wells for light regions) are known in the prior art. See, for example, U.S. Patent 5,155,599 to Delabastita titled *METHOD FOR FORMING HALFTONE SCREEN AND APPARATUS THEREFOR,* incorporated herein by reference. The formulae for such a supercell are:

$$period = \frac{\sqrt{A^2 + B^2}}{\sqrt{M^2 + N^2}} \text{ in pixels,}$$

$$ruling = \frac{resolution}{period} = \frac{(ppi) * \sqrt{M^2 + N^2}}{\sqrt{A^2 + B^2}} \text{ in lines per inch,}$$

and

$$angle = \arctan\left(\frac{A}{B}\right) + \arctan\left(\frac{M}{N}\right).$$

By making good choices for *A, B, M* and *N,* one can define many screens with interesting rulings and angles.

Supercells can be used several ways for screening, producing results that give the same angles and rulings, but different properties with respect to the imaged densities. Two ways are described.

The most general way of using supercells is to produce a set of bitmaps: for each density, a bitmap with the size of a supercell is held in memory. Screening is then performed by the following computer implemented steps:

■ determining from the original image the wanted output density at the current location;

■ selecting the bitmap corresponding to this density from a set of predetermined bitmaps;

■ selecting within this bitmap, the pixel corresponding to the current location; and

■ copying this pixel (a bit, which is ON or OFF) to the output.

This method is sometimes called font-look-up, as it is analogous to the way characters are copied from a font to produce text. It shall be called bitmap lookup table screening herein.

The second method, using so-called threshold arrays, may be considered a special case of the bitmap lookup table screening method. Threshold arrays are sometimes called dither arrays. Using threshold arrays has the limitation that when a pixel is black for some density, say $\alpha$, the pixel at that location will be black for all densities higher than $\alpha$.

With this threshold array limitation, it is possible to produce a fast screening method using considerably less memory than the bitmap lookup table screening method. Instead of having a number of bitmaps, one for each possible input density, only one array of numbers is constructed and stored. When a tile, for example a supertile, is used, the array has the size of the tile (the tile size is determined by the numbers $A$ and $B$. In the case of a supertile, the numbers $M$ and $N$ deal with other aspects of the supertile), and each number in the array corresponds to the lowest input density which will produce a transparent output in a platemaking master (*i.e.,* output pixel bit is ON). This density is called the threshold, and the tile (*e.g.*, the supercell) containing the values is called a threshold array. When supercells are so used, the threshold array is repeated to cover the whole output space (for example, the full film or full plate).

Screening is then performed as a process comprising the following steps—usually computer or special hardware implemented— for each pixel of the output bitmap (see also U.S. Patent 5,235,435 to Schiller, incorporated herein by reference, and titled

*METHOD OF PRODUCING HALFTONE IMAGES*):

■ Determining the position in the threshold array for the current pixel;

■ Comparing the wanted density value at that position (determined by the original image) with the value in the threshold array at the calculated position. It is to be noted that one should take care that both values refer to the same range. If the threshold array contains n steps, the density values should be reduced to a value between 0 and *n*; and

■ If the wanted density is larger than the threshold value, setting the output pixel to ON, else setting the output pixel to OFF.

Most modem (circa 2003) high quality screening systems are based ON the threshold array principle, although bitmap lookup table screening is more general and allows for better quality. The cost of the amount of memory needed with bitmap lookup table screening is becoming reasonable as RAM memory prices continue to drop.

**A screening method that provides additional exposure in the well regions of a platemaking master of highlight areas**

A first screening method embodiment uses bitmap lookup table screening. Not having the threshold array limitation does provide for every gray level screen pattern to be determined independently. One version is convertible to threshold arrays.

In one embodiment, the screening system is fully determined by determining each bitmap of a set of bitmaps that defines a bitmap lookup table. The screening system uses the set of bitmaps, one bitmap per gray level, by determining the halftone screen for a part of an image according to the bitmap corresponding to the gray level of the part. The number of bitmaps is denoted NSTEPS herein, and represents NSTEPS gray levels. Typically the first bitmap is the lightest bitmap, which may, but need not be all white (empty, no dots). The last bitmap is for reproducing the darkest area.

In one embodiment, the NSTEPS bitmaps are pre-calculated and pre-stored, and have dimensions according to a supercell. However, in general, other size bitmaps may be used, and the bitmaps need not be pre-calculated.

In one embodiment, a *first midtone threshold* is defined as a gray level or coverage percentage such that gray levels above the first midtone threshold are generated according to a pre-selected screening method. This first midtone threshold is denoted TRANSITION1 and is typically below 50 % gray level. In most implementations, TRANSITION1 is between 5 and 15 %. Gray values above TRANSITION1 and below one or more other transition points defined below—if such additional transitions are included—use bitmaps that are generated according to the pre-selected screening method. In one embodiment, the bitmaps are generated by interpreting a spot function ON all pixels and thresholding this spot function in such a way that the number of pixels turned ON is according to the expected gray level. Another way of determining these bitmaps is by thresholding an existing threshold array for the same dot shape, ruling and angle combination. Such thresholding of threshold arrays is well known in the screening art.

The bitmap for the gray-level TRANSITION1 is still a screening pattern using the pre-selected screening method.

For gray levels below TRANSITION1, the calculation for the bitmaps below TRANSITION1 uses as input the bitmap for the TRANSITION1 gray level, and determines the behavior at lower dot percentages.

Assume the bitmap at TRANSITION1 has NDOTS dots. Typically, these dots are clusters of adherent pixels that are turned ON. Since TRANSITION1 is below 50 %, the dots are not touching each other, so there are NDOTS non-adherent zones. Typically, these dots are centered around some theoretical center which are organized in a system of rows and columns according to the screen frequency and screen angle. See FIGS. 16A and 16B.

NDOTS displaced dot centers are now determined. Instead of these displaced dots being centered in the middle of the dots found at TRANSITION1, the method includes determining a set of displaced positions for these dots. The displaced positions are determined using to the following method steps:

1. Pre-select a maximum displacement from the original dot centers of the TRANSITION1 screen bitmap to the displaced dot centers. This maximum displacement is typically close to the radius of the dots in the bitmap at TRANSITION1. Keeping the radius smaller than the size of the dots in the bitmap at TRANSITION1 makes the algorithm considerably easier to implement, but is not a restriction of this method; alternate embodiments may use larger maximum displacement.

2. For each dot: determine at random an angle between 0 and 360 degrees, using a random number between 0 and 360, and a displacement from the original center. In one embodiment, the displacement is a random length between 0 and the maximum displacement. An improved embodiment uses for the displacement the displacement=sqrt(random(0->maxdist^2)).
   Define the new center positions according to the displacement and angle from each original center.

The new dot centers together form a stochastic pattern. It was observed that this stochastic pattern was sometimes not pleasing. Therefore, an improved implementation includes the following repositioning method that defines a set of displaced centers as follows:

1. For each dot, calculate a net repelling vector. This repelling vector is determined by adding all repelling vectors of all other dots of the dot under inspection. The repelling vector between two dots is a vector standing in the direction of the line between the two dots, away from the other dot and with a size proportional to the inverse of the distance between the dots. It will be clear that the contribution to the summed repelling vector will mainly come from dots close by. In a faster version of this step 1, the method is speeded up by neglecting all dots that are far away, e.g., not in a predefined neighborhood. One version only includes those dots whose center in the 8 neighboring positions of the original dot center of the current dot.

2. Form displaced positions for the dots by displacing all dots a distance in the direction of the repelling vector. In one embodiment, the displacement is fixed, e.g., 1 pixel. In another version, the displacement is made approximately proportional to the size of the net repelling vector. Typically, average displacements are made in the order of 1 pixel.

3. Repeat steps 1 and 2 until the positioning is meets an acceptance criterion. It is desired that there is sufficient lack of systematic placement of the alternative dot centers. The criterion may be according to human inspection, or a mathematical criterion. One mathematical criterion is to restrict maximum repelling vector size is below a selected threshold. Another mathematical criterion is a minimum distance between each of the dots. Each criterion includes that the dots are different from the "perfect" square dot placement typical for conventional screening.

In addition to determining displaced dot positions, the method of determining the bitmaps for less than TRANSITION1 includes assigning a sequence to the dots. One embodiment includes the following method:

1. For each of the displaced dot centers, calculate the net repelling vector as described in step 1 of the repositioning method above.

2. Find the dot center with the largest net repelling vector. Assign this as the next in order dot, initially the first dot: dot number 1.

3. Remove the dot assigned in step 2 dot from the dots, and update the repelling vectors of all other dots. This removes the effect of the dot of step 2.

4. Repeat steps 2 and 3 while assigning the next dot as the one with the largest net repelling vector the order of NDOTS dots has been assigned.

Once an ordering has been assigned for each dot, i.e., an ordered sequence of dots is determined at a position for each dot, the bitmaps are created. In one embodiment, this is carried out dot by dot for each bitmap.

For each bitmap, and, within the bitmap, for each dot of the bitmap:

1.  Determine the size of the dot for the bitmap. This size determines a number of pixels to be switched ON. This number of pixels is denoted CURNPIX. The size is dependent on the current gray level and on the ordering of the dot in the ordered sequence dots. Also select a second threshold gray level ALLDOTSPRESENT, smaller than TRANSITION1 such that for gray levels above ALLDOTSPRESENT, all dots will have the same first size, and will form the printable dots in the final plate. For gray levels under ALLDOTSPRESENT, some dots will be of the first size, while others will be approximately of a second size smaller than the first size. These smaller second size dots are for providing the additional exposure in the well region, and will not form printable dots the plate. The small size is selected to include relatively few pixels being ON. The larger dots of the first size have sequence number below CURSEQUENCE, while the rest of the dots are of the second small size. CURSEQUENCE is defined according to the current bitmap's gray level, denoted CURGRAYLEVEL, as
    CURSEQUENCE = CURGRAYLEVEL*NDOTS/ALLDOTSPRESENT.
    This means that between the lowest gray level and the gray level ALLDOTSPRESENT, there are small and large dots. The smaller dots become larger dots as the gray scale increases, with number of larger dots growing one by one according to the determined dot sequence. Above ALLDOTSPRESENT, the dot size is equal to the dot size of a conventional screen with the same gray level. This way, CURNPIX is determined for each dot.

2.  Determine the center position of the dot, denoted CURCENTER. This center position is chosen somewhere on the line between the original dot center, denoted ORIGCEN and the displaced dot center, denoted DISPLCENTER as:
    CURCENTER= ORIGCEN + (DISPLCENTER - ORIGCEN)*CURGRAYLEVEL/TRANSITION1.
    Thus, new dot positions are determined that smoothly vary from the random displaced positions to the original dot positions of the pre-selected, e.g., conventional screening pattern as the gray scale increases.

3.  Take the CURNPIX pixels closest to the new current center position CURCENTER and switch them ON.

The two main parameters of the screening method are the two dot sizes. The small dot size is selected for making a platemaking master that provide additional exposure in the well regions in the highlights such that smaller holes may be used for the larger first size dots. When the second smaller size is 0, the method appears as a screen that does not provide this additional exposure. According to the current invention, the small dots are selected to not print on a flexo plate.
In one embodiment, the gray level at which the small dots are used is the first non-zero gray level. In such an embodiment, areas don't have any dots, but even the smallest non-white area already has the small dots, and typically a small number of big dots.
It is to be noted that while in the above embodiment, the larger dots are switched ON one by one according to the sequence, in an alternative embodiment, the larger dots are switched ON in groups. In one such alternative, half of the dots are switch on at once, and the other half only at ALLDOTSPRESENT, creating further differentiation between the gray levels by changing the dot sizes only.
In determining the dot centers (step 2 above), a smooth transition is made from a conventional screen's dot positions to the random dot positions. Alternate embodiments also may be used. One such alternative uses CURCENTER=ORIGCEN. The resulting screen *appears* similar to prior art screens, e.g., of Delabastita (U.S. 5,766,807). It is to be noted that this is in appearance only because the screens produced by the method described herein include the provision for additional exposure in the well region that may improve printability of the visible halftone dots.
Another alternative to the described displacement step 2 is to vary the displacement according to gray level in a slower way, maintaining the dot at the filly displaced centers until ALLDOTSPRESENT and only then moving smoothly to the original dot centers.
While the method above is for using bitmaps in a lookup method, one version can convert the bitmaps to threshold arrays that may be used in a threshold array method. For conversion threshold arrays, the dot centers are maintained within the boundaries of the size of the screen dots at TRANSITION1. The pixels turned ON furthermore adhere to the threshold array limitations. This can be done by modifying the above step 3 of turning the pixels ON to the following modified step 3:

3.  (modified) Make sure all pixels switched ON in the bitmap just below the current bitmap are also switched ON, and switch additional pixels ON as close as possible to those already ON pixels but within the boundaries of the size of the screen dots at TRANSITION1 until there are CURPIX pixels ON in the current dot of the current bitmap, maintaining the dot centers within the boundaries of the size of the screen dots at TRANSITION1.

Such a method includes calculating bitmaps from grayscale 0 up.

Thus, a threshold array for screening has been described, which, when thresholded against a low gray level produces a stochastic screen with dots not all equal in size, including small dots, and produces when thresholded against a medium gray level a conventional screen according to a frequency, angle and dot shape definition. The small dots provide for creating shallower wells in a relief plate, e.g., a flexographic plate, between halftone dots than if the small dots are not included.

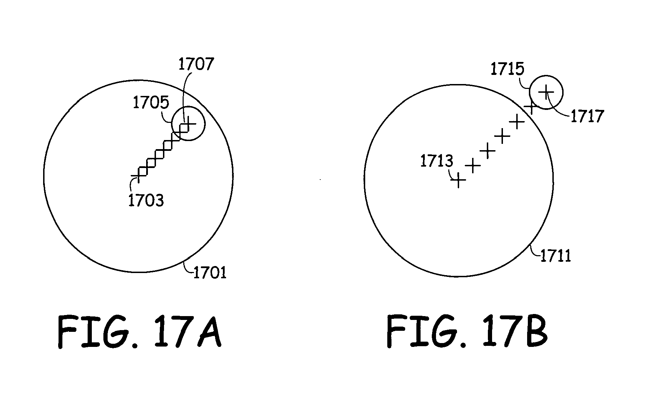

FIGS. 17A and 17B show two sets of displacements. In FIG. 17A, the larger dot 1701 is shown at the original dot center 1703 of the screen at TRANSITION1, and the smaller dot 1705 is shown at the displaced dot center 1707. A set of displacements of the dot centers is shown. The smaller dot 1705 at the displaced dot center 1707 is within the boundaries of the larger dot 1701 at the original dot center 1703. In FIG. 17B, on the other hand, the smaller dot 1715 is shown at the displaced dot center 1717 which is outside the boundary of the larger dot 1711 at the original dot center 1713 of the screen at TRANSITION1. The case of FIG. 17B is not convertible to threshold array screening.

In an improved embodiment, the last part in step 3 of maintaining the dot centers within the boundaries of the size of the screen dots at TRANSITION1 is guaranteed.

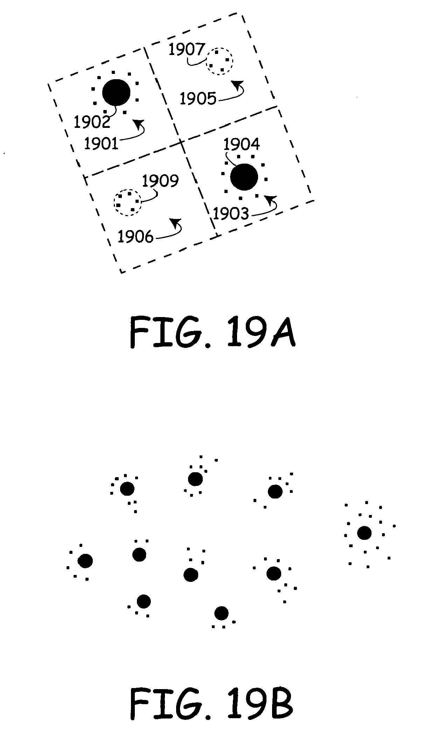

FIG. 19A shows the results of the improved embodiment for an image gray level TRANSITION1 less than ALLDOTSPRESENT. The dots 1902 and 1904 are halftone dots that are present at the current gray level CURGREYLEVEL. The locations are those of the dots 1902 and 1904 at ALLDOTSPRESENT, and are generated according to the method described above. The circular regions 1907 and 1909 shown as dotted lines are to indicate positioning at the CURGREYLEVEL level, and do not represent pixels that are turned ON as part of the screening process. The improved embodiment adds one or more dots a small distance from the printable halftone dots 1902 and 1904, as shown in dot regions 1901 and 1903, respectively. These additional dots provide extra exposure, which makes the dots stronger. These additional dots are a small distance, e.g., two or three pixels from the perimeter of the dot, thus also providing the protection zone. Furthermore, rather than a single small dot in the center of the circular regions 1907 and 1907, as in the embodiment described above, the improved embodiment adds one or more dots within the circular regions 1907, 1909. In alternate versions, the dots are distributed not only a fixed distance, i.e., around a ring around the printable dot 1902, 1904, but at more than one distance from the center of the dot.

The regions marked 1905 and 1906 are typically the regions with the largest well depth, and it is to reduce this well depth that additional dots are provided within the circular regions 1907 and 1909.

To implement this aspect for a bitmap lookup screening method, the aspect of step 3 "maintaining the dot centers within the boundaries of the size of the screen dots at TRANSITION1" is not explicitly carried out in step 3, since it is automatically achieved, and the following step 4 is added:

4.   Determine a number of small dots, the number denoted herein as NSUPPORTINGDOTS. These dots are to be put around each printable halftone dot (1902, 1904 in FIG. 19). Determine for each of these dots a distance from the center of circular dot shape. In one embodiment, this distance is the current radius of the dot + 2 pixels. Further determine an angle for the each small dot. In one embodiment, the angle for a dot is a random, uniformly distributed angle. A further (optional) part of step 4 includes adding additional dots in each "missing-dot" area where there is an absence of the full halftone dot, within circular regions (shown as 1907, 1909 in FIG. 19A) around the center of the missing halftone dots. This can be done by checking whether in the adjacent cells the dot is already filled. If not, put the dots in full number, if it is, omit the dots in that direction or diminish the number of dots in that direction.

The number of supporting dots is typically chosen in such a way that there is a sufficient number of dots to generate a shape somewhat resembling a circle. In one embodiment, this is 4 or more. The dots are such that they are not so close to each other that there is a risk that they will appear in a print. A number between 6 to 8 is preferred. A higher value for NSUPPORTINGDOTS creates more support and diminishes the risk that the dot breaks or bends during printing, but might increase the dot gain of the dot, e.g., under relatively high pressure during printing since the resulting dot relief pattern may have walls that are less steep on the relief plate. A most desirable dot would have steep shoulders, but be strong enough to not bend over or break during printing.

In a first embodiment, the dots are arranged over more or less equal angles around the 360 degrees of the circle. In a second embodiment, more dots are places at near of that have no supporting printing dots in a close neighborhood in the same direction. One implementation of the second embodiment includes arranging the dots over equal angles as in the first embodiment, and then for each such added dot, ascertaining whether or not there is a printing dot in the neighborhood, for example by checking within a circle of a selected distance, such a distance typically selected to be close to the original screen period. See for example, FIG. 19B, in which two circles are placed around each printing dot, but in which most printing dots have a number of the little dots omitted because of the presence of neighboring printing dots. Only the more isolated printing dots show dots in the full two circles.

The method can be adapted to support the threshold array model. In that case, all supporting dots around a halftone dot must be within the boundaries of the dots at TRANSITION1 and all supporting dots that are positioned at a first level below TRANSITION1 must remain there at all levels above the first level, meaning that they will be taken up by the growing dot. This means that as and thus at certain gray levels, the dots may touch, which may reduce the quality of the result. Such result should but still be better than not including the additional exposure.

**A screening method that provides line pattern perforations in the shadow areas**

To determine the bitmaps for grayscales in the shadow regions, a ***second midtone threshold***, denoted TRANSITION2, is defined as the gray scale in the above which a the pre-selected, e.g., conventional screening method is no longer necessarily used. TRANSITION2 is typically higher than TRANSITION1, but this is not a limitation of the perforations for solids-rendition aspect of the invention. If TRANSITION2 is smaller than TRANSITION1, the screening may not necessarily be the pre-selected, e.g., conventional screening method for any gray-level.

Above TRANSITION2, the method includes modifying the conventional screening pattern by switching OFF pixels that were switched ON at lower gray levels. This creates perforations. One aspect is a screening method wherein the thickness of the perforations decreases with decreasing gray level in the shadow regions above TRANSITION2.

U.S. Patent 6,532,082 to Dewitte describes the Original Dewitte Method of how to add stochastic perforation patterns for making offset plates. One aspect of the invention includes modifying the Original Dewitte Method to create perforations that are for solids rendition and for rendition in the shadow regions. The shape of such perforations, e.g., the line patterns, were described above. The method of creating perforations—albeit not of this shape, and albeit for a different type of plate for a different purpose—are sufficiently described in U.S. Patent 6,532,082. The description herein shall therefore focus now on the nature of these perforations.

In U.S. Patent 6,213,018, Samworth describes that the solid rendering of a flexographic system improves when adding cells of circular shape, organized in rows and columns at a very high frequency that is matched to the locations of ink cells in an ink metering roller. The method of U.S. patent 6,213,018 can therefore also be incorporated with one or more aspects of the present invention the current invention by setting TRANSITION2 just below 100 % gray level. Instead of perforations, which are defined herein as for not carrying ink, a cell pattern can be defined for carrying the ink, e.g., a regular pattern of circles as in the Samworth invention. As described in U.S. Patent 6,213,018, the cells layout, including the diameter of the cells should be chosen in relation to the anilox roller parameters so that the cells are ink-carrying.

Another aspect of the invention comprises, instead of including the ink-carrying circular cells of U.S. 6,213,018, including line pattern perforations designed to not carry ink on the plate. Tests have shown that lines improve the solid rendering at least as well as the ink-carrying circular cells of Samworth. Such line pattern perforations may be parallel lines of a line screen, or crosshatches, or wavy lines, or zig-zag lines. The line pattern may even be circular line patterns designed to be almost filled-in in a reproduction. Contrast this with the solid circular cells designed to be ink-carrying cells on the plate as in U.S. 6,213,018.

In yet another embodiment, stochastic perforation patterns are included, similar to those described for a different purpose in U.S. Patent 6,532,082.

When there is a main screen used for at least one non-solid rendition area, in one embodiment, the main screen is according to a supercell of a first set of supercell parameters. The pattern of perforations is chosen to be periodic, repeating with the same supercell parameters as the main screen, or with different supercell parameters. One method includes using the same screening parameters for the perforations as the screen itself, but doubling or tripling the number of dots in the system. The new set of screen supercell parameters then includes the same values for parameters A and B (see FIGS. 16A and 16B) but multiples higher values of the M and N.

In another embodiment, the perforations are included in a pattern defined by a supercell that has what is called a ***rational valued relationship*** to the set of supercell parameters of the original screen. Such a rational relationship is defined by two integer-valued parameters, denoted k and 1, as follows: the perforation pattern is on a new grid with a set of supercell parameters that has the same A and B values, and new M and N parameters, denoted M2 and N2, defined as:

$$M2 = M*l + N*k,$$

and

$$N2 = N*l - M*k,$$

where A, B, M and N are as defined above for the main screen, and * is multiplication.

The result of this is that there is a relationship between the screen frequency and angle of the original screen and the screen frequency and angle of the perforations in the solid regions. This relationship is as follows:

$$Angle\_difference = arctan(k/l),$$

and

$$Ruling\_factor = sqrt(k^2+l^2),$$

where Angle_difference and Ruling_factor are the differences in angle, and screen rule frequency, respectively, and as before, k and 1 are integer numbers.

If k or 1 is 0, clearly the angle difference is 0 and the pattern screen is just a multiple of the original screen.

k and 1 are typically chosen in such a way that the resulting pattern is close to 45 degrees to the printing direction.

In the case of flexography, typically the angles 7, 22,37,52,67 and 82 degrees are used for main screens. The best choices for k and 1 are as shown in Table 1:

**Table 1**

| Screen Angle | k | l | pattern angle | Ruling factor |
|---|---|---|---|---|
| 7.5 | 2 | 2 | 52.5 | 2.8284 |
| 22.5 | 1 | 3 | 40.93 | 3.1623 |
| 37 | 0 | 3 | 37 | 3 |
| 52 | 0 | 3 | 52 | 3 |
| 67 | 3 | 1 | 49.06 | 3.1623 |
| 82.5 | 2 | 2 | 37.5 | 2.8284 |

These combinations have shown to produce very good results. Clearly other combinations may also provide acceptable results and are within the scope of this aspect of the invention.

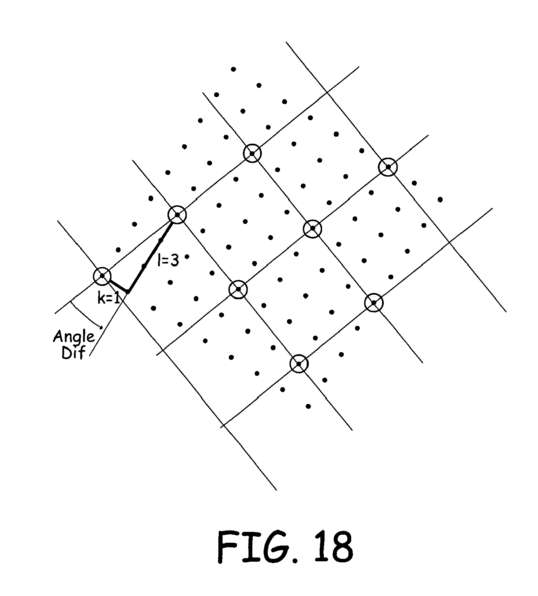

See also FIGS. 16A and 16B. FIG. 18 shows the relationship of the regular screen supercell structure to a pattern of, in the case shown, circularly shaped perforations when such a rational valued relationship is used.

Another aspect of the invention is not only to include the perforation in the solid rendition areas, but rather also in the shadow areas, such that there is no sudden transition to the inclusion of the perforations. Otherwise, a reproduction that has a vignettes or a continuous tone region that covers a density range all the way to 100 % coverage will show an ugly tonal jump from the last non-patterned gray level to the patterned solid. Therefore, another aspect of the invention includes perforations such that the nature of the perforations is related to the local gray level to provide a smooth transition from the threshold gray level using the main screen with no perforations to the areas for solid rendition including the perforations. TRANSITION2 is thus selected to be significantly lower then just below 100 %.

In one embodiment, e.g., using a line pattern of a selected frequency as the perforation pattern, the perforations pattern for gray scales below solid is the same line pattern as for solid rendition, e.g., at the same frequency, but with the line thickness modulated according to the gray level. Thus, for example, using a line screen pattern, the thickness of the lines in the line pattern is reduced as the gray scale is reduced for gray levels above TRANSITION2.

A method embodiment is now defined for creating bitmaps screening for gray levels above TRANSITION2.

For each bitmap:

1.    Determine the appearance of the pre-selected, e.g., conventional screen to determine which dot (or pixel) is ON or OFF prior to adding the perforations. One method of doing this is to just threshold a conventional screening threshold array with the same supercell parameters as the pre-selected screen. In the case that it is desired to end the use of the pre-selected earlier than 100 %, e.g., such that the perforations pattern is modulated for plurality of number of gray levels, a conventional threshold array is thresholded with a modified threshold, which is determined in such a way that the conventional screen becomes ON at another intermediate level denoted FIRSTSOLID, which is lower than 100 %. All bitmaps above FIRSTSOLID are entirely ON before perforation happens.

2. For the gray level of the bitmap, determine the perforation pattern to add. In one embodiment, a set of parallel lines is used, and the perforation pattern is determined by screening method using a line screen. In another embodiment using a screening pattern that may be created by a threshold array, the perforation pattern is determined using a perforation threshold array with the same parameters A and B as the supercell parameters of the pre-selected (main) screen under construction. This threshold array takes as further parameters a different M and N, denoted M2 and N2, and typically higher than M and N of the pre-selected (conventional) screen. One also selects a dot shape, e.g., for a line pattern, one selects the dot shape for a line screen, or for circular line patterns, one selects the dot shape for a circular screen. This threshold array is now thresholded with a threshold value that varies linearly from 0 at TRANSITION2 to a pre- selected highest value denoted FULLPERFORATION to be used for the bitmap at 100 %. This highest value is typically determined experimentally for creating the best solid rendition, as described above.

In an alternate embodiment, rather than step 2 selecting FULLPERFORATION according to experiments to determine the perforation width for the particular offset printing plate, a variation includes setting FULLPERFORATION well above the expected value for best solid rendition, and using a dot gain compensation tool to map the solid to the lower dot percentage where the printed density is maximized. One suitable dot gain compensation tool is known as IntelliCurve™ made by Esko-Graphics, of Gent, Belgium, the applicant of the present invention.

In a first alternate, the conventional pre-selected screening with which to start the bitmaps start with can be replaced with the result of the highlight operations described above. So it is possible that the dots being switched ON only one by one, are already perforated.

Another alternate includes the concept of ***activity range*** defined herein as a property of the perforation pattern, and further defined as the set of gray scales for which the perforations are active. The method then includes:

■ For each perforation, make the appropriate pixel or pixels (in the case of multi-pixel perforations) OFF, i.e., no exposure in the platemaking master, in all the bitmaps corresponding to densities in the activity range of the perforation. This results in a set of bitmaps that can then be used to image a source image with traditional bitmap lookup table screening methods. How to screen using bitmap lookup table screening would be known to those of ordinary skill in the art. The perforations in the bitmaps are in general different for different density bitmaps.

Many methods for selecting the activity ranges for any perforation are possible, and all are within the scope of the invention. One embodiment uses the activity range selection rule are determined by the neighborhood. With this activity rule, a potential perforation becomes valid only when there is a minimal number of ON pixels surrounding the potential perforation. This guarantees that around any perforation, there are enough ON pixels remaining to ensure that upon printing, the perforation will be enlarged by dot gain to be close to being filled with ink to avoid visible white areas in a solid region, and to ensure that the perimeter of a solid area, for example, a halftone dot, is not perforated.

In one implementation, the activity rule is used as follows: a pixel may only be perforated (*i.e.*, set to OFF) in the output if all 24 pixels in the surrounding of the current pixel are set to ON. A pixel is in the surroundings of another pixel if it is up to a predefined distance, in one embodiment, three or less pixels, in another embodiment, two or less pixels away in either dimension. A pixel with integer coordinates values (in pixels) of $v$ in the vertical direction and $h$ in the horizontal direction is thus in the surroundings of a pixel with integer coordinates values (in pixels) of $curv$ and $curh$ in the vertical and horizontal directions, respectively if $curv-2 \leq v \leq curv+2$ and $curh-2 \leq h \leq curh+2$. Excluding the pixel itself, there thus are 24 pixels in the surrounding of one pixel.

In an alternate embodiment, the number/frequency of perforations, e.g., lines, included is a function of the gray-scale, according to a pre-defined functional relationship. Typically, one implementation includes more line patterns as for the higher density screen bitmaps. The above activity rules, of course, are special cases of the general rule. To apply a generalized activity rule for line pattern perforations, one determines a curve for the number of line perforations, for example based on measurements on a test sheets, and uses this curve to determine the activity range of the perforations.

Activity rules are not mutually exclusive and can be combined in order to improve the final (printed) results for different situations.

How to select parameters M2 and N2 in step 2 above was already discussed above. For best results, the values M2 and N2 are selected such that the pattern of the perforations is according to a supercell that has a rational relationship to the supercell parameters of the original pre-selected (original) screen, such that each dot of the original screen sees the perforation pattern in the same way. See above and FIG. 18 for a definition of rational relationship. Thus, A and B remain the same for the perforations pattern, but M2=M*1+N*k and N2=N*1-M*k, where k and 1 are integer numbers, * is multiplication, and A, B, M and N are the supercell parameters of the original pre-selected screen.

Another aspect of the invention is a method of making a threshold array for use in making a printing master for making a relief plate that includes perforations. The method includes:

(a) providing an original threshold array for screening an image to be printed;

(b) selecting the nature, number and position of perforations to be included in relief plate according to the grey level;

(c) generating a modified threshold array by setting each matrix element in the original threshold array that corresponds to a perforation to a predetermined value that ensures that the element is prevented from being set OFF when used for halftoning, regardless of the density value of the image to be printed; and

(d) using the modified threshold array in place of the original threshold array to produce a master for the relief plate for printing the image.

The modified threshold array is such that when thresholded against the maximum gray level, produces a pattern of perforations in the platemaking master. How to select the nature, number and position of perforations in the modified threshold array is described above.

*Use of the invention to improve the color gamut of the system*

The above discussion has been for a platemaking master for producing a relief plate for a single color. For multicolor printing, a set of plates is used, e.g., four colors or more. When aspects of the present invention are included in such color plates for color reproduction, the colors produced by these plates will be different than those produced by prior art plates that for example, do not include the more printable dots in the highlights or the better shadow and/or solid rendition provided by the addition of perforations. This would occur whenever different plates are used. The inventor has found, for example, that using aspects described above, for example, colors with lower density highlights can be reached, and furthermore, denser colors are typically achievable.

The inventor has found that even the saturation may be improved. The inventor found that using the line pattern perforations, a solid printed using a plate created using one or more aspects of the present invention better covers the substrate with a thinner layer of ink. This was found to often lead to a higher saturation.

One explanation may be as follows, and the invention is not restricted as to whether or not the following explanation is the reason. Ideally, cyan absorbs any and all red light and nothing else. In reality, a real cyan colorant also absorbs some green and blue light. Red is absorbed, even with very thin layers, apparently because even real cyan inks are extremely effective in absorbing red. When a thicker layer of ink is used, there is more green and blue absorption. Thus, the thin ink layers are spectrally more selective than thick ink layers. The effect is further seriously influenced by the amount of uncovered substrate. The thin but well covering ink layer will hardly reflect any red. However, a thick but badly covering ink layer will absorb all red and parts of green and blue where there is ink, but it will reflect even all the red where there is no ink. Thus, evenly and thinly covering a substrate is better than thickly covering a substrate, and better than unevenly covering a substrate.

Thus, using the invention may provide for higher saturation, and thus a larger color gamut.

*Generating a color profile for a printing process using relief plates.*

Color management systems are known and common. For example, it is known how to generate a color device profile for many output devices, such as a printing processes, and a proofing device for a printing process. The International Color Consortium (ICC) of, Reston, VA (on the Web at www.ICC.org) provides guidelines and instructions for generating such device profiles, including providing the definition of a widely adopted file format.

A color device profile defines how to convert from a device independent color space, such as CIE-XYZ and CIE-LUV, to the amount of colorant, e.g., ink, to use on the output device. For example, for a particular process that uses screening, the device profile provides a mechanism to convert any color to percentage ink coverage percentages for plates for the inks.

A typical method for generating a device color profile for an output device includes printing a set of patches for a set of coverage percentages of the colorants, then measuring the actual color of the printed patches, e.g., using a photospectrometer, or other device that provides the actual colors, e.g., in some device independent color space. A reverse mapping is then produced from colors in the device independent color space to the required coverage percentages for reproducing the color. How to generate the mapping is well known to those in the art, and many programs for doing so are available.

As described above, for relief plates such as flexographic plates, it has been observed that printing a color solid (100% coverage percentage) may produce an output that is less dense in the ink than should occur, e.g. because large drops occur. See, for example, FIG. 10B and the description above.

It has been observed that for each ink, a screened output at a high percentage, e.g., between 90% and 100% ink coverage, produces a denser print than does a solid (100%) ink coverage. One aspect of the invention is producing a color profile for a printing process that uses a relief plate, such as flexography, that takes into account that 100% coverage may not produce the highest density of any ink.

Thus, one embodiment of the invention is a method of printing a reproduction of an image. The method includes determining a non-100 % density that prints darker than the full solid, mapping the highest gray-value in the image to the determined non-100 % density, mapping gray values in the image less than the highest gray-value to densities lower than the determined non-100 % density, and creating a relief plate from the densities to which the image was mapped, the relief plate usable for making the reproduction of the image.

According to another aspect of the invention, a method is now described of generating a device color profile for a relief printing process such a flexographic process. By the process is meant the type of substrate, the type of colorants (inks), the method of generating the plates, the RIP process, including the type of screening, the press, the flexographic plate material, and so forth.

The method includes in one version determining the screen coverage percentage that prints at the maximum density for the ink. That percentage is assigned to be the percentage for printing 100% if the ink. All other input percentages are mapped to a percentage between the minimum and the maximum.

The method further includes printing a set of patches using the printing process using a plurality of inks printed at different gray-levels. The printing uses a relief plate for each ink made from a corresponding platemaking master. Alternately, for characterizing a proofing process, the printing uses the proofing process. The set of patches may be on a chart such as the well-known IT8 chart (International Standards Organization), or any other chart. See for example, Bruce Fraser, Fred Bunting, Chris Murphy: *Real World Color Management,* Peachpit Press; 2003, **ISBN**: 0201773406. Each master for each ink includes, for any patch for reproducing a maximum-level of the ink, a screened pattern at less than 100% coverage. In one version, that screen coverage percentage is the screen coverage percentage that prints at the maximum density for the ink. This typically, is between 90% and less than 100%. The method further includes measuring the color of each patch, e.g., using a photospectrometer, or other instrument that provides the color of the patch in or convertible to a device independent color space. The measurements are then used to generating a color device profile for the printing process for use in a color management system. Such a color device profile includes the mapping from a color in the device independent color space to the required dot percentages for reproducing the color using the printing process (or proofing process).

The color profile is then usable for generating color separations for the printing process or for a color proofing process for the printing process.

Other above-described aspects of the invention also may be incorporated, For example, in one embodiment, the master for each ink further includes, for any patch for reproducing a minimum non-zero gray-level of the ink, a halftone pattern of dots. Each such master for each ink provides exposure in the well-regions between the halftone dots in any area in the platemaking master for reproducing said minimum gray-level, such that the wells in the resulting plate made using the platemaking master are shallower in the corresponding area of said minimum gray-level than if no exposure is provided.

In one embodiment, the screened pattern used for the maximum-level of each ink has a coverage percentage higher than for all gray-levels of the ink less than the maximum.

When printing the chart, the parameters are selected to match the inks and plate and printing environment. One embodiment further includes printing a dot gain compensation chart having many more steps per color than the color charts can have. Color charts have typically between 5 and 10 patches per color, which, by overlapping them lead to thousands of measurements. Dot gain compensation charts don't have overlapping patches between the colors. There is no problem to measure 20 or 30 patches for each color. This allows to a better precision in the highlight areas, which are clearly influenced by aspects of this invention. The printed chart is then measured, e.g., with a photospectrometer in order to make a color mapping profile, e.g., an ICC profile. This method is well-known in the industry. In addition, a dot gain compensation table can be measured. Also this is a well-known method in the industry.

The resulting ICC profile can then be used for color matching in a manner known to this in the art. For example, color separations can be produced, and even color matches with pre-defined colors, e.g., PANTONE colors can be obtained.

In an alternate embodiment, a color device profile is obtained using the aspect of the invention that includes perforations in an area of the printing plate for printing solid. Thus, an aspect is a method of generating a device color profile for a relief printing process, e.g., flexography., the method including printing a set of patches using the printing process with a plurality of inks printed at different gray-levels. Each printmaking master (if used for making a plate) for each ink includes, for any patch for reproducing a minimum non-zero gray-level of the ink, a halftone pattern of dots. Each printmaking master (if used for making a plate) for each ink further includes, for any patch for reproducing a maximum-level of the ink, a set of line pattern perforations, such that the plate includes in the area to be printed solid with the color, a set of line pattern perforations designed to not carry ink.

The method further includes measuring the color of each patch, and generating a color device profile for the printing process for use in a color management system. The color profile is usable for generating color separations for the printing process or for a color proofing process for the printing process.

This aspect may be combined with other aspects of the invention. For example, in one embodiment, each master for each ink provides exposure in the well-regions between the halftone dots in any area in the platemaking master for reproducing said minimum gray-level, such that the wells in the resulting plate made using the platemaking master are shallower in the corresponding area of said minimum gray-level than if no exposure is provided.

Thus, various features and aspects have been described.

While the description above describes flexographic plates and method of producing such flexographic plates, the described aspects of the invention are applicable to any relief plates and methods of producing such relief plates.

While the description above mostly described a platemaking master for a plate for reproducing a single color ink, those in the art understand that a plurality of such plates, one for each of a set of inks, may be used for printing a range of colors. Furthermore, when in the above description, when terms such as "gray-level" and "gray-scale" are used, those in the art will understand such terms to refer be the amount of whatever color is being reproduced by the plate, such that a "gray level" of a particular color appears as a density or coverage percentage of that particular color in the reproduction.

One embodiment of each of the methods described herein is in the form of a computer program that executes on a processing system, e.g., one or more processors that are part of a RIP or of a computer for driving an imagesetter. Thus, as will be appreciated by those skilled in the art, embodiments of the present invention may be embodied as a method, an apparatus such as a special purpose apparatus, an apparatus such as a data processing system, or a carrier medium, e.g., a computer program product. The carrier medium carries one or more computer readable code segments for controlling a processing system to implement a method. Accordingly, aspects of the present invention may take the form of a method, an entirely hardware embodiment, an entirely software embodiment or an embodiment combining software and hardware aspects. Furthermore, the present invention may take the form of carrier medium (e.g., a computer program product on a computer-readable storage medium) carrying computer-readable program code segments embodied in the medium. Any suitable computer readable medium may be used including a magnetic storage device such as a diskette or a hard disk, or an optical storage device such as a CD-ROM.

It will be understood that the steps of methods discussed are performed in one embodiment by an appropriate processor (or processors) of a processing (i.e., computer) system executing instructions (code segments) stored in a storage subsystem. It will also be understood that the invention is not limited to any particular implementation or programming technique and that the invention may be implemented using any appropriate techniques for implementing the functionality described herein. The invention is not limited to any particular programming language or operating system.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

Similarly, it should be appreciated that in the above description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Description of Illustrative Embodiments are hereby expressly incorporated into this Description of Illustrative Embodiments, with each claim standing on its own as a separate embodiment of this invention.

All publications, patents, and patent applications cited herein are hereby incorporated by reference.

Thus, while there has been described what is believed to be the preferred embodiments of the invention, those skilled in the art will recognize that other and further modifications may be made thereto without departing from the spirit of the invention, and it is intended to claim all such changes and modifications as fall within the scope of the invention. For example, any formulas given above are merely representative of procedures that may be used. Functionality may be added or deleted from the block diagrams and operations may be interchanged among functional blocks. Steps may be added or deleted to methods described within the scope of the present invention.

**Claims**

1. A platemaking master for producing a relief plate, said plate including at least one area intended for reproducing a minimum non-zero gray-level using a first halftone pattern of dots, said platemaking master providing exposure in the well-regions between the halftone dots of said area in an area corresponding to said plate area, such that the wells in the plate are shallower than if no exposure is provided, thereby providing for smaller halftone dots than if no exposure is provided in the well regions of said at least one area.

2. A platemaking master as recited in claim 1, wherein the exposure is provided by one or more transparent dots in the well regions designed to be non-printing.

3. A platemaking master as recited in any of the previous claims, wherein each well includes a protective region around any printable halftone where no exposure is provided.

4. A platemaking master as recited in any of the previous claims, wherein said platemaking master comprises:

   printable halftone dots in said corresponding area to produce said halftone pattern of dots; and
   small dots in the well regions between printable halftone dots of said corresponding area, said small dots being to provide the exposure in the well regions,

   the size or sizes of the small dots selected to ensure that the small dots do not print in said area of the plate.

5. A platemaking master as recited in any of the previous claims, said plate including an area to be printed solid, the master comprising in the master's corresponding area to be printed solid a set of line patterns, such that the plate includes in the area to be printed solid a set of line pattern perforations designed to not carry ink.

6. A screening method creating a combination screen pattern on a relief plate or platemaking master for a relief plate, such that highlight areas have additional dots in the well regions designed to be non-printing on the plate.

7. A screening method as recited in claim 6, wherein the number of additional dots decreases with increasing gray-level in the highlight region.

8. A screening method as recited in any of claims 6 or 7, such that halftone dots in shadow areas include line pattern perforations and further such that areas for solid rendition include line pattern perforations.

9. A threshold array for screening, the threshold array, when thresholded against a low gray-level produces a stochastic screen with dots not all equal in size, including small dots, and produces when thresholded against a medium gray-level a conventional screen according to a frequency, angle and dot shape definition,
   said small dots providing for creating shallower wells in a relief plate between halftone dots than if said small dots are not included.

10. A method of making a platemaking master for making a relief plate that includes perforations, the method including:

    (a) providing an original threshold array for screening an image to be printed;
    (b) selecting the nature, number and position of perforations to be included in a relief plate;
    (c) generating a modified threshold array by setting each matrix element in the original threshold array that corresponds to a perforation to a predetermined value that ensures that the element is prevented from being set OFF when used for halftoning, regardless of the density value of the image to be printed; and
    (d) using the modified threshold array in place of the original threshold array to produce a platemaking master for a relief plate for printing the image,
    the modified threshold array being such that when thresholded against the maximum gray-level produces a pattern of perforations in the platemaking master.

11. A screening method using a set of bitmaps, one bitmap per gray-level, the screening method determining a halftone screen for a part of an image according to the bitmap corresponding to the gray-level of the part, such that the bitmap for a first gray-level includes dots of a first kind that are ON in a first position where the bitmap of a second gray-level higher than the first gray-level has no dots ON of the first kind, said dots of a first kind intended to be not printable and intended for providing additional exposure in the well regions between printable halftone dots in the bitmap of the first gray-level.

12. A platemaking master for making a flexographic plate, the master providing exposure in the well regions between printable half-tone dots of highlight areas such that the wells are shallower than if no exposure is provided for the well regions, thereby providing for smaller halftone dots than if no exposure is provided in the well regions of highlight areas.

13. A platemaking master as recited in claim 12, wherein the providing the exposure in the well regions between half-tone dots of highlight areas in a manner that includes avoiding exposure in a guard interval around each printable halftone dot.

14. A platemaking master as recited in any of claims 12 or 13, wherein for areas that are to be reproduced for a shade of gray below a first pre-determined threshold, modulating the tone levels includes varying the number of printing dots per unit area.

15. A relief plate for printing an image, said image including an area to be printed solid, the plate including in the area to be printed solid a set of line pattern perforations designed to not carry ink on the plate.

16. A relief plate as recited in claim 15, wherein the line pattern perforations include at least one of the set of patterns consisting of a line screen pattern, a jagged line pattern, a wavy line pattern, a line pattern wherein the lines are not of constant thickness, a cross-hatch pattern, and a periodic pattern of circular lines.

17. A relief plate as recited in claim 15, wherein the line pattern perforations form a stochastic pattern.

18. A relief plate as recited in claim 15, wherein the line pattern perforations form a periodic pattern at a frequency in at east one direction of at least 200 per inch.

19. A relief plate as recited in claim 15, wherein the plate includes at least one non-solid rendition area screened with a halftone screen having a screen frequency, and wherein the line pattern perforations form a periodic pattern at a frequency an integer multiple of the screen frequency.

20. A relief plate as recited in claim 15, wherein the plate includes a least one non-solid rendition area screened with a halftone screen having a screen pattern that has a supercell structure defined by a first set of supercell parameters, and wherein the line pattern perforations form a periodic pattern according to a second set of supercell parameters that have a rational relationship to the first set of supercell parameters, the rational relationship defined by two integer values parameters.

21. A relief plate as recited in any of claims 15 to 20, wherein the plate includes at least one non-solid rendition area screened with a halftone screen at a halftone screen angle, wherein the line pattern perforations are substantially in a pattern direction, and wherein the pattern direction is between 20 and 70 degrees, preferably approximately 45 degrees, to the printing direction.

22. A relief plate as recited in any of claims 15 to 21, wherein thickness of lines in the line pattern perforations is selected such when the plate is inked and a reproduction is made, the lines in the reproduction almost fully but not necessarily completely fill in.

23. A relief plate as recited in any of claims 15 to 22, wherein the plate includes at least one non-solid rendition area screened with a halftone screen, including at least one area for reproduction at a corresponding gray-level above a threshold gray-level, and wherein the perforations are included in at least some of the non-solid areas for reproduction at corresponding gray-levels above said threshold gray-level.

24. A method of printing a reproduction of an image comprising:

    (a) determining a non-100 % density that prints darker than full solid, said non-100% density produced by a pattern that includes perforations;
    (b) mapping the highest gray-value in the image to the determined non-100 % density;
    (c) mapping gray values in the image less than the highest gray-value to densities lower than the determined non-100 % density; and

(d) creating a relief plate from the densities to which the image was mapped, the relief plate usable for making the reproduction of the image,
such that the in areas for 100% density, the relief plate includes grooves.

FIG. 1 (Prior Art)

202

P

}203

201

FIG.2A
(Prior Art)

206

P

}207

205

FIG.2B
(Prior Art)

210

P

}211

209

FIG.2C
(Prior Art)

P

}215

213

FIG.2D
(Prior Art)

FIG. 3A
(Prior Art)

FIG. 3B

FIG. 3C

FIG. 3D

403
407
405

400

FIG. 4

501  503

333

FIG. 5A

501  505

333

FIG. 5B

FIG. 6

711 701

FIG. 7A

703 711

713

FIG. 7B

705
711

713

FIG. 7C

707
711

713

FIG. 7D

709
711

FIG. 7E

801

FIG. 8A

801

FIG. 8B

FIG. 9A

FIG. 9B

FIG. 9C

FIG. 9D

FIG. 10A

FIG. 10B

1107

FIG. 11A

1103

1109

FIG. 11B

1105

1201    1103    1107    1103    1203    1103

1105    1109    1109    1105    1105

# FIG. 12A          FIG. 12B          FIG. 12C

FIG. 13A

FIG. 13B

FIG. 13C

FIG. 13D

FIG. 13E

FIG. 13F

FIG. 14

FIG. 15

FIG. 16A (Prior Art)

FIG. 16B (Prior Art)

FIG. 17A

FIG. 17B

FIG. 18

FIG. 19A

FIG. 19B